(19) Europäisches Patentamt
European Patent Office
Office européen des brevets

(11) **EP 2 197 122 A1**

(12) **EUROPEAN PATENT APPLICATION**

(43) Date of publication:
**16.06.2010 Bulletin 2010/24**

(51) Int Cl.:
*H04B 3/14* (2006.01)    *H04L 25/03* (2006.01)

(21) Application number: **09015264.6**

(22) Date of filing: **09.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **10.12.2008 JP 2008314893**

(71) Applicant: **NEC Electronics Corporation Kawasaki, Kanagawa 211-8668 (JP)**

(72) Inventor: **Kato, Hiromu Kawasaki, Kanagawa 211-8668 (JP)**

(74) Representative: **Glawe, Delfs, Moll Patent- und Rechtsanwälte Postfach 26 01 62 80058 München (DE)**

(54) **Transmission line loss compensation circuit and transmission line loss compensation method**

(57)    To provide a transmission line loss compensation circuit and transmission line loss compensation method that compensate for a loss of high frequency components by altering the compensation intensity of a linear equalizer quickly reacting to a change when the transmission environment changes, and that maintain a stable state when there is no change in transmission loss. The transmission line loss compensation circuit includes a linear equalizer that compensates for a transmission line loss of high frequency components, a high-pass filter that extracts high frequency components from an output of the linear equalizer, a peak detector that compares the peak voltage of a high-pass filter output to first and second reference voltages, and a control circuit that controls the compensation intensity of the linear equalizer based on the detection results of the peak detector so that the peak voltage becomes an intermediate voltage between the first reference voltage and the second reference voltage.

FIG. 1

EP 2 197 122 A1

**Description**

TECHNICAL FIELD

(REFERENCE TO RELATED APPLICATION)

This application is based upon and claims the benefit of the priority of Japanese patent application No. 2008-314893, filed on December 10, 2008, the disclosure of which is incorporated herein in its entirety by reference thereto.

The present invention relates to a transmission line loss compensation circuit and transmission line loss compensation method, and particularly to a transmission line loss compensation circuit and transmission line loss compensation method that compensate for a transmission line loss of high frequency components in high-speed serial communication, using a linear equalizer.

BACKGROUND

In high-speed serial transmission, when transmission loss increases, ISI (inter-symbol interference) jitter occurs, the eye opening of the receiver gets smaller, and the timing margin is reduced. This is due to the fact that a transmission line shows the characteristics of a low-path filter; the longer the transmission line is, the more high frequency components deteriorate.

As one of technologies for compensating for this, there is a method in which a linear equalizer that boosts high frequency components is provided for the receiving end. When the deterioration of high frequency components in the transmission line is more or less compensated by the boost of high frequency components by the linear equalizer, an optimal eye waveform can be obtained from the output of the linear equalizer.

However, if the boost of high frequency components by the linear equalizer is too weak, the jitter compensation will be insufficient, and if the boost is too much, the jitter will increase. Therefore, the compensation intensity of the linear equalizer must be adjusted optimally according to the transmission loss.

However, there are applications in which a user is not able to freely change their settings. When one needs to deal with various transmission lines having lengths and losses greatly different from each other in such an application, it is difficult to do so with a fixed linear equalizer setting. Therefore, the linear equalizer requires a function of automatically adjusting the level of compensation for the transmission line loss of high frequency components.

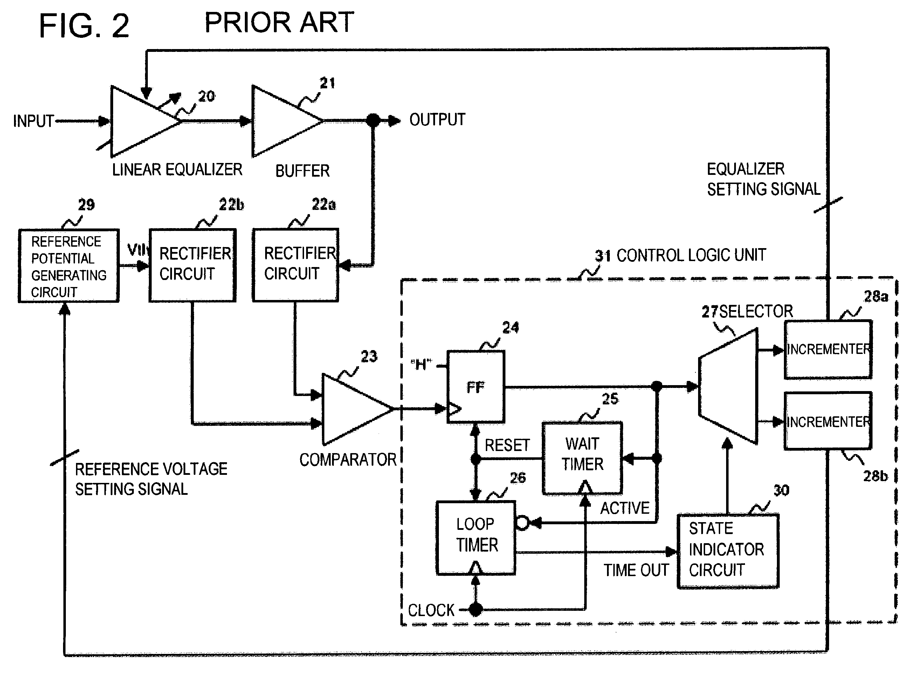

FIG. 2 is a block diagram of a conventional transmission line loss compensation circuit having an automatic adjustment function, described in Non-Patent Document 1. The transmission line loss compensation circuit in FIG. 2 automatically adjusts the intensity of a linear equalizer 20 so that the output waveform of a buffer 21 will be optimal.

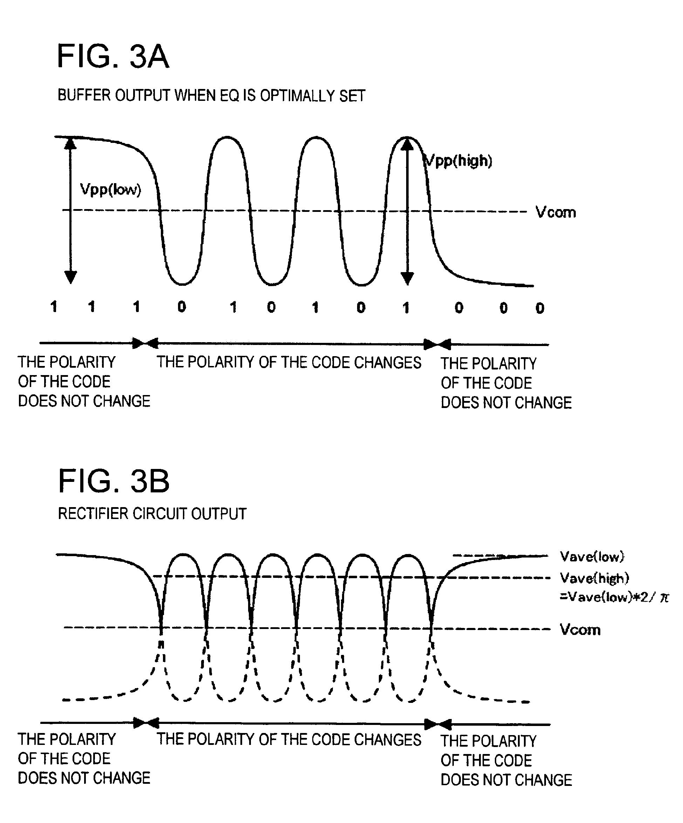

FIG. 3A shows an output signal waveform of the buffer 21 when the linear equalizer 20 is optimally set. When the linear equalizer 20 is optimally set, the peak amplitude of parts where the polarity of the code changes (high frequency components): Vpp (high) and the peak amplitude of parts where the polarity of the code does not change (low frequency components): Vpp (low) are the same level. On the other hand, if the level of high frequency components compensated by the linear equalizer 20 is too much, the level of Vpp (high) will be higher than that of Vpp (low), and if the compensation intensity is too little, the level of Vpp (high) will be lower than that of Vpp (low) (not shown in the drawing).

By supplying the ideal output signal shown in FIG. 3A to a rectifier circuit 22a, a waveform indicated by a solid line in FIG. 3B is obtained. Assuming that the waveform of the parts where the polarity of a code changes in FIG. 3A is a sin wave, since the average rectification value is obtained by multiplying the peak value by $2/\pi$, Vave (high) = Vave (low)$\times 2/\pi$ in the optimal condition, where Vave (high) is the average of the average rectification values of the parts where the polarity of a code changes, and Vave (low) is the average of the average rectification values of the parts where the polarity of a code does not change. Therefore, the intensity of the linear equalizer is adjusted so that Vave (high) = Vave (low)$\times 2/\pi$ in this conventional technology.

The automatic adjustment of the intensity constitutes two modes: a reference potential adjustment mode that adjusts a reference potential Vth according to the level of Vave (low) and a linear equalizer intensity adjustment mode that adjusts the level of Vave (high) according to the adjusted reference potential. The linear equalizer 20 is controlled by switching between these two modes at a predetermined interval using a loop timer 26 of a control logic unit 31, a state indicator circuit 30, and a selector 27.

First, in the first reference potential adjustment mode, the reference potential Vth is adjusted so that the reference potential Vth equals the buffer output Vave (low) by a loop of a rectifier circuit 22b, a comparator 23, a flip-flop 24, the selector 27, an incrementer 28b, a reference potential generating circuit 29, and the rectifier circuit 22b, formed in this order.

The rectifier circuits 22a and 22b rectify the outputs of the buffer 21 and the reference potential generating circuit 29, and the comparator 23 compares output levels of the rectifier circuits 22a and 22b. When Vth < Vave (low), the comparator 23 outputs a pulse, and the output of flip-flop 24 is high level. When the flip-flop 24 outputs a high level signal before a wait timer 25 measures a predetermined amount of time, the incrementer 28b increases the setting by one step, thereby increasing the reference potential Vth, and at the same time, the flip-flop 24 and the loop timer 26 are reset.

By continuing to increase the setting, Vth reaches Vave (low), and the comparator 23 no longer outputs the pulse. If the output of the flip-flop 24 stays at low level, the incrementer 28b does not increment the setting code. After more time has elapsed, the loop timer 26 outputs a time out signal, and the circuit enters into the second linear equalizer intensity adjustment mode.

Next, in the linear equalizer intensity adjustment mode, Vave (high) is adjusted so that the buffer output Vave (high) = Vave (low)$\times 2/\pi$ in a loop of the rectifier circuit 22a, the comparator 23, the selector 27, an incrementer 28a, the linear equalizer 20, the buffer 21, and the rectifier circuit 22a, formed in this order.

In the linear equalizer intensity adjustment mode, the reference potential Vth = Vave (low) adjusted in the reference potential adjustment mode is changed to Vth = Vave (low)$\times 2/\pi$, and the same adjustment as in the reference potential adjustment mode is performed. At this time, what is incremented is the setting code of the linear equalizer 20.

The rectifier circuits 22a and 22b rectify the output of the buffer 21 and the reference potential Vth, and the comparator 23 compares them. When Vave (high) < Vth = Vave (low)$\times 2/\pi$, the comparator 23 outputs a pulse, and the output of flip-flop 24 is high level. When the flip-flop 24 outputs a high level signal before the wait timer 25 measures a predetermined amount of time, the incrementer 28b increases the setting by one step, thereby increasing the intensity of the linear equalizer 20, and at the same time, the flip-flop 24 and the loop timer 26 are reset.

By continuing to increase the setting, Vave (high) reaches Vth = Vave (low)$\times 2/\pi$, and the comparator 23 no longer outputs the pulse. If the output of the flip-flop 24 stays at low level for a predetermined amount of time, the incrementer 28a does not increment the setting code. After more time has elapsed, the loop timer 26 outputs the time out signal, and the linear equalizer intensity adjustment mode is complete.

After the circuit has gone through the two modes described above and the linear equalizer intensity adjustment mode has been completed, the high frequency components of the output of the buffer 21 are adjusted to the low frequency components times $2/\pi$. After the completion of the linear equalizer intensity adjustment mode, the circuit returns to the reference potential adjustment mode, and switches between the two modes thereafter. It is construed that this is done so that the circuit will be able to return to the normal setting if it enters into an abnormal setting.

Further, this is not mentioned in Non-Patent Document 1, but the reason why the setting code is updated only in one direction (increment) is that the adjustment code will fluctuate in a stable state if decrement is performed as well, and this needs to be avoided.

Non-Patent Document 1

Uchiki, H., et al., "A 6Gb/s RX Equalizer Adapted Using Direct Measurement of the Equalizer Output Amplitude," ISSCC 2008/SESSION 5/HIGH-SPEED TRANSCERIVERS/5.4, February 2008.

SUMMARY

The disclosure of the above Non-Patent Document is incorporated herein by reference thereto.

The present invention gives the following analysis. The transmission line loss compensation circuit described in Non-Patent Document 1 has the following problems for use in an environment in which the state of the transmission line changes. The first problem is that the linear equalizer setting cannot be turned down once it is stronger than the optimal setting. Further, the second problem is that, when the output amplitude of the linear equalizer becomes low such as when the input amplitude of the receiver is set low during operation, the compensation intensity ends up being set higher than the optimal level.

The reason for the first problem is as follows. In the linear equalizer intensity adjustment mode, the circuit operates so as to increase the linear equalizer intensity setting until the high frequency components of the buffer output exceed the reference potential. However, once they exceed the reference potential, there is no means for knowing whether the setting is optimal or the compensation intensity is too strong, nor is there means for decreasing (decrementing) the setting. As a result, when connection changes from a state with a large transmission loss to a state with a small transmission loss during the linear equalizer intensity adjustment mode or after the intensity has been adjusted, this change is not reflected on the compensation intensity of the linear equalizer, and the linear equalizer remains set high even if the transmission loss is small.

The reason for the second problem is as follows. In the reference potential adjustment mode, the reference potential is adjusted until the comparator no longer outputs the pulse (until the reference potential is higher than the low frequency component peak of the buffer = Vave (low)). However, once the reference potential has been adjusted high, even if the buffer output amplitude becomes low thereafter, the pulse is not outputted since the reference potential remains high. In other words, the reference potential is not updated. In a state in which the linear equalizer is set optimally, if the transmission loss remains the same and only the amplitude gets lower, the circuit will recognize that the high frequency components of a signal are lower than the reference potential. As a result, the linear equalizer will be set higher than the optimal setting.

The cause for the problems described above is the structure in which the reference potential and the compensation intensity of the linear equalizer can be adjusted only upwards. If a decrement function is enabled in the structure described in Non-Patent Document 1, it will be possible to make a downward adjustment, however, the setting will always be incremented or decremented and will not converge to a fixed value. In order to settle on a setting, the adjustment will have to be terminated, and in this case, since the automatic adjustment will not continue, there will be no means for adjustment when the setting temporarily gets out of the optimal state.

A transmission line loss compensation circuit according to an aspect of the present invention has a linear equalizer that compensates for a transmission line loss of high frequency components, a high-pass filter that extracts high frequency components from an output of the linear equalizer, a peak detector that compares a peak voltage of an output of the high-pass filter to first and second reference voltages, and a control circuit that controls the compensation intensity of the linear equalizer based on detection results of the peak detector so that the peak voltage becomes an intermediate voltage between the first reference voltage and the second reference voltage.

Further, in a transmission line loss compensation method for compensating for a transmission line loss of high frequency components using a linear equalizer according to another aspect of the present invention, a peak voltage of high frequency components in an output signal of the linear equalizer is detected and compared to a first reference voltage and a second reference voltage, the compensation intensity of the linear equalizer is increased when an absolute value of the peak voltage is smaller than either of absolute values of the first and the second reference voltages, the compensation intensity of the linear equalizer is decreased when an absolute value of the peak voltage is larger than either of absolute values of the first and the second reference voltages, and the compensation intensity of the linear equalizer is maintained when the peak voltage is an intermediate voltage between the first and the second reference voltages.

The meritorious effects of the present invention are summarized as follows.

According to the present invention, there are provided a transmission line loss compensation circuit and transmission line loss compensation method that compensate for a loss of high frequency components by altering the compensation intensity of a linear equalizer quickly reacting to a change when the transmission environment changes, and that maintain a stable state when there is no change in transmission loss.

BRIEF DESCRIPTION OF THE DRAWINGS

FIG. 1 is a block diagram of a transmission line loss compensation circuit according to an example of the present invention.
FIG. 2 is a block diagram of a conventional transmission line loss compensation circuit described in Non-Patent Document 1.
FIG. 3A is a waveform diagram of an ideal output signal in a transmission line loss compensation circuit.
FIG. 3B is a waveform diagram of an ideal output signal of a rectifier circuit in the transmission line loss compensation circuit shown in FIG. 2.
FIG. 4A is a circuit diagram of a linear equalizer in an example of the present invention.
FIG. 4B is a frequency response diagram of the linear equalizer shown in FIG. 4A.
FIG. 5 is a block diagram of a peak detector in an example of the present invention.
FIG. 6 is an operation timing chart of the peak detector shown in FIG. 5.
FIG. 7 is a circuit diagram of a high frequency reference level generating circuit in an example of the present invention.
FIG. 8 is a variation of a peak detector that detects the negative-side peak voltage of an input signal in an example of the present invention.
FIG. 9 is an operation timing chart of the peak detector shown in FIG. 8.
FIG. 10 is a circuit diagram of a high frequency reference level generating circuit corresponding to the peak detector shown in FIG. 8.
FIG. 11 is another variation of a peak detector that detects the positive-side and the negative-side peak voltage of an input signal in an example of the present invention.
FIG. 12 is an operation timing chart of the peak detector shown in FIG. 11.
FIG. 13 is a circuit diagram of a high frequency reference level generating circuit corresponding to the peak detector shown in FIG. 11.
FIG. 14 is a block diagram of a transmission loss compensation circuit in a variation having differential signals as its input/output signals in an example of the present invention.

FIG. 15 is a block diagram of a differential peak detector in the variation shown in FIG. 14.

FIG. 16 is a circuit diagram showing a configuration example of a differential comparator in the differential peak detector shown in FIG. 15.

FIG. 17 is an operation timing chart of the peak detector shown in FIG. 15.

FIGS. 18A and 18B are block diagrams of a control circuit in an example of the present invention.

FIG. 19 is a drawing showing how the state of the control circuit in FIG. 18 changes.

FIG. 20 is a block diagram of a transmission line loss compensation circuit according to another example of the present invention.

FIG. 21A is a circuit diagram of a variable gain amplifier in the transmission line loss compensation circuit shown in FIG. 20.

FIG. 21B is a frequency response diagram of the variable gain amplifier shown in FIG. 21A.

FIG. 22 is a block diagram of a transmission line loss compensation circuit according to yet another example of the present invention.

FIG. 23 is a circuit diagram of a high frequency reference level generating circuit and a low frequency reference level generating circuit in the transmission line loss compensation circuit shown in FIG. 22.

PREFERRED MODES

A preferred mode of the present invention will be described with reference to the drawings as necessary. It should be noted that drawings and symbols referred to in the description of the preferred mode are used as examples of the mode, and variations of the mode are not limited by these.

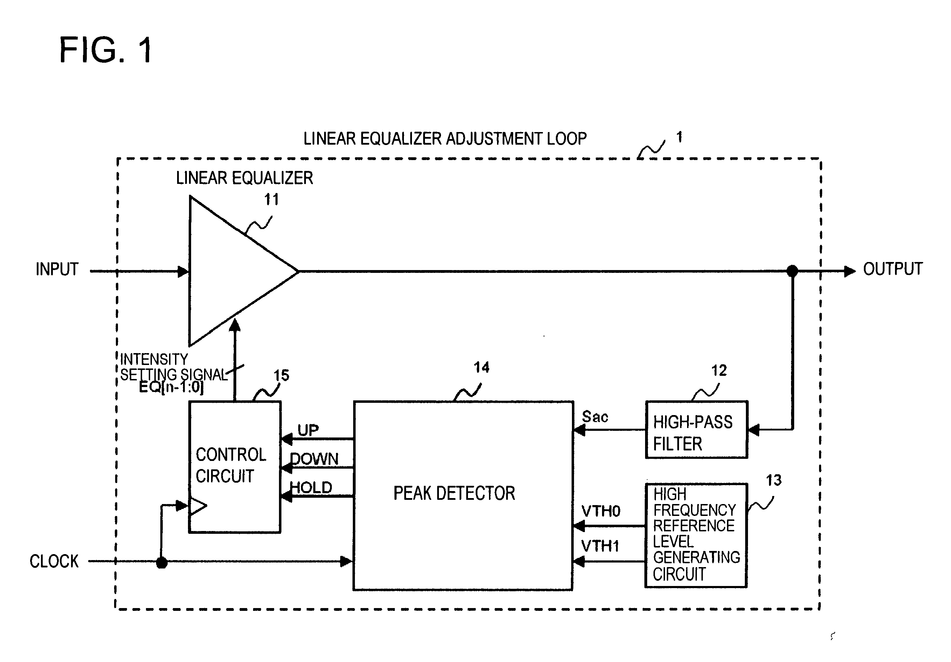

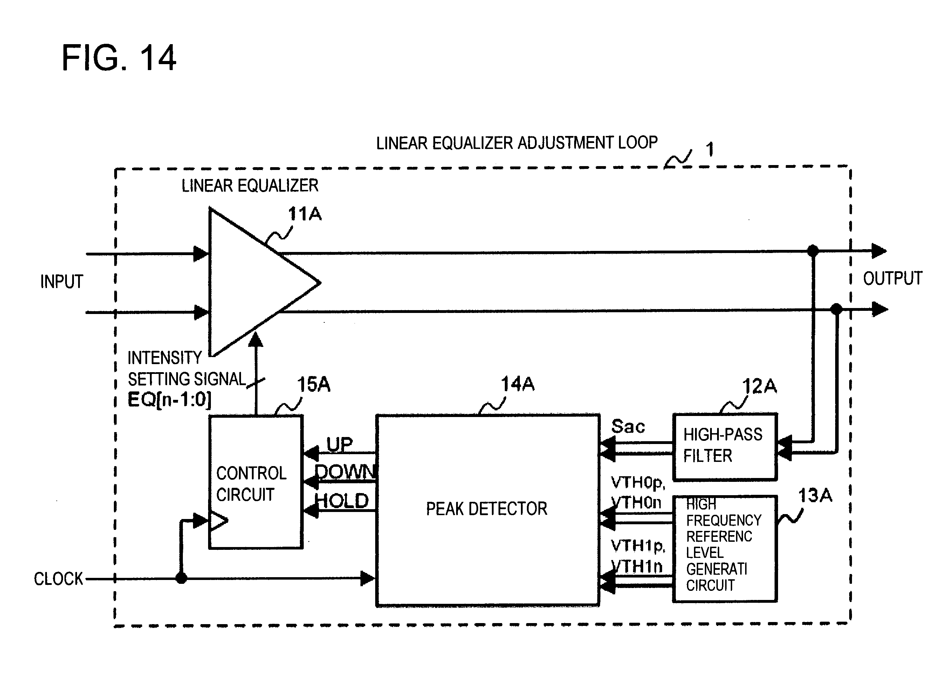

For instance, a transmission line loss compensation circuit in a mode of the present invention has a linear equalizer 11 that compensates for the transmission line loss of high frequency components, a high-pass filter 12 that extracts high frequency components from an output of the linear equalizer 11, a peak detector 14 that compares a peak voltage of a high-pass filter output Sac to first and second reference voltages (VTH0, VTH1), and a control circuit 15 that controls the compensation intensity of the linear equalizer 11 so that the peak voltage is an intermediate voltage between the first and the second reference voltages (VTH0, VTH1) based on the detection results of the peak detector 14, as shown in FIGS. 1 and 14. Therefore, since the compensation intensity of the linear equalizer is controlled so that the peak voltage of high frequency components is an intermediate voltage between the first and the second reference voltages, using the first and the second reference voltages, the compensation intensity can be adjusted when the transmission environment changes and the peak voltage goes out of the range between the first and the second reference voltages, and a stable state can be maintained when there is no change in the transmission environment.

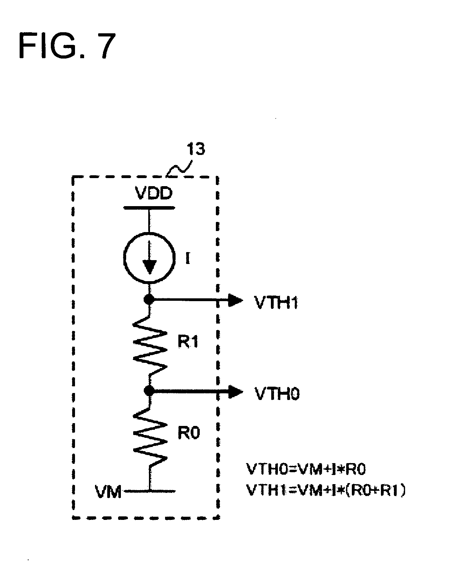

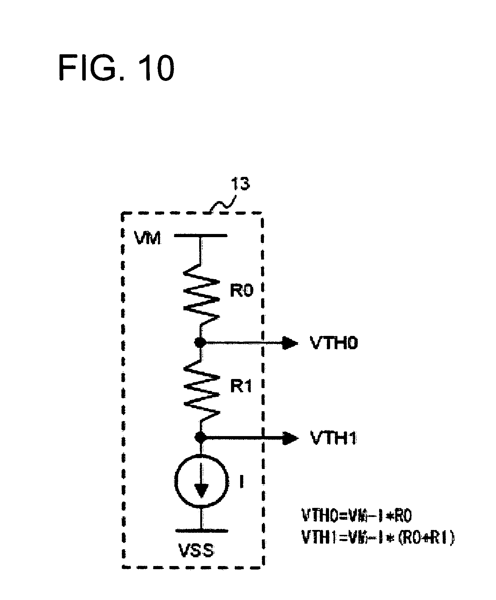

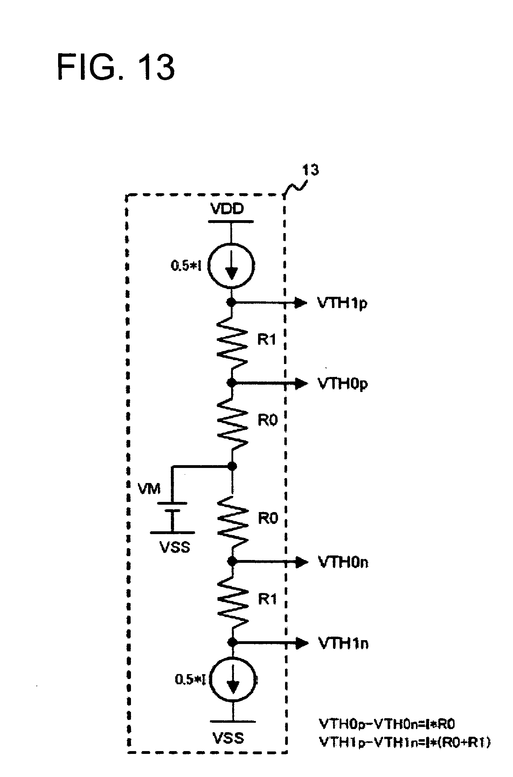

Further, for instance, the transmission line loss compensation circuit in a mode of the present invention further includes a high frequency reference level generating circuit 13 that generates the first and the second reference voltages as shown in FIG. 1. The concrete configuration of this high frequency reference level generating circuit 13 can be changed according to the peak value detected as follows: a case where the peak value of the positive side of a single-phase signal is detected (FIG. 7), a case where the peak value of the negative side of a single-phase signal is detected (FIG. 10), and a case where the peak values of the positive side and the negative side of a single-phase signal are detected (FIG. 13).

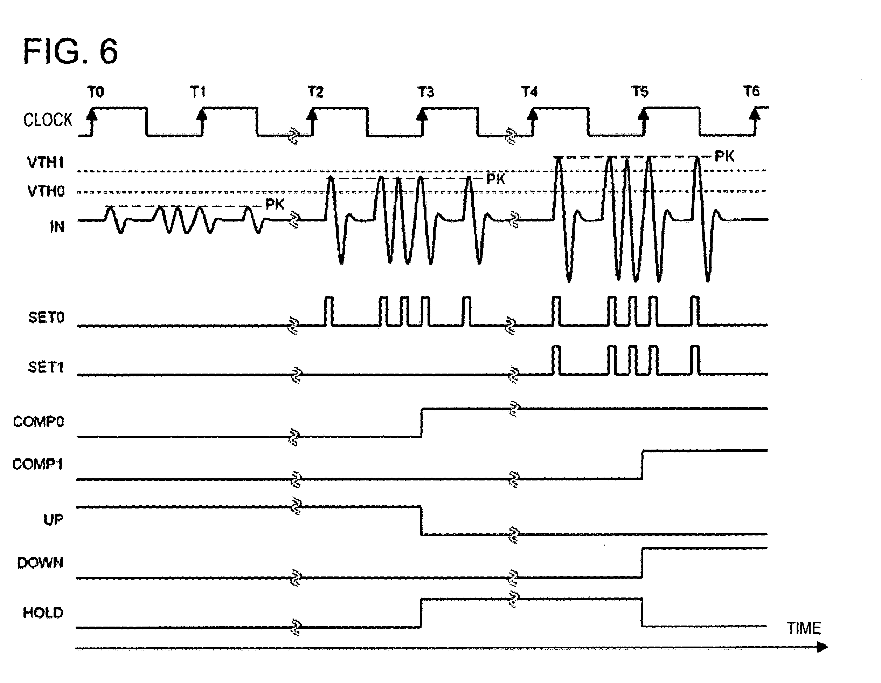

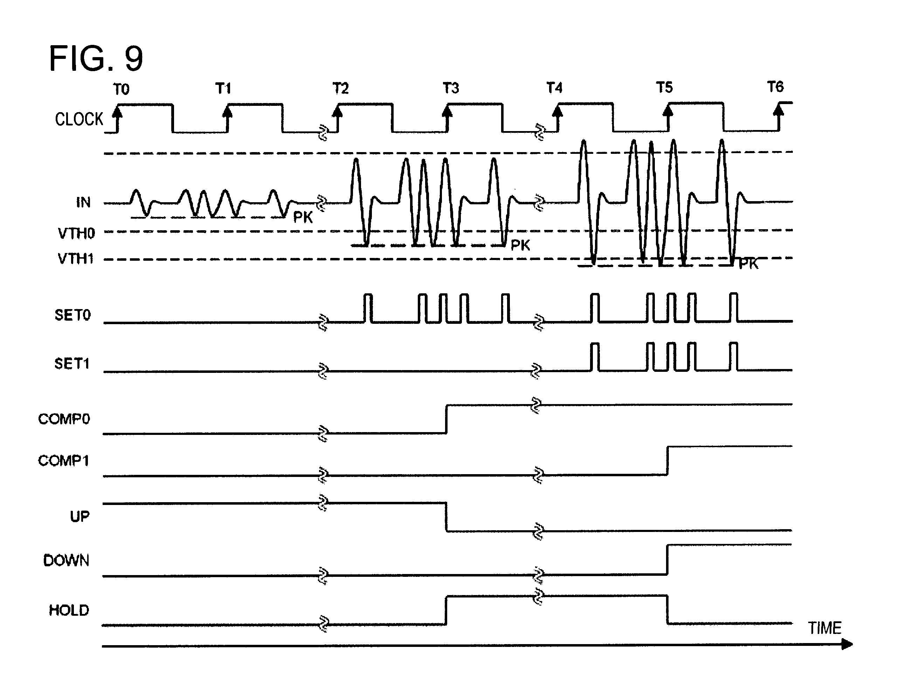

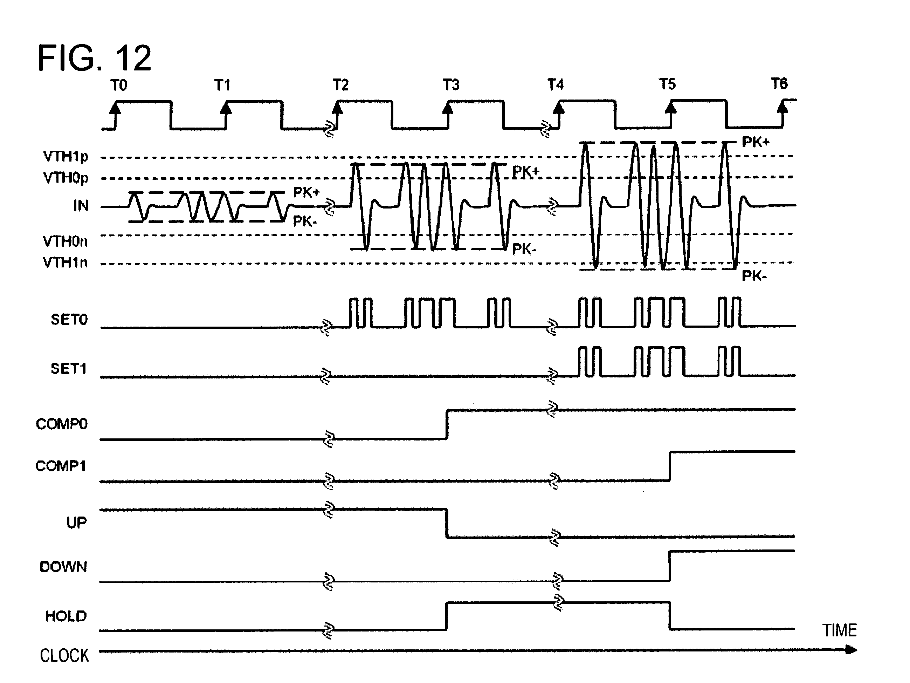

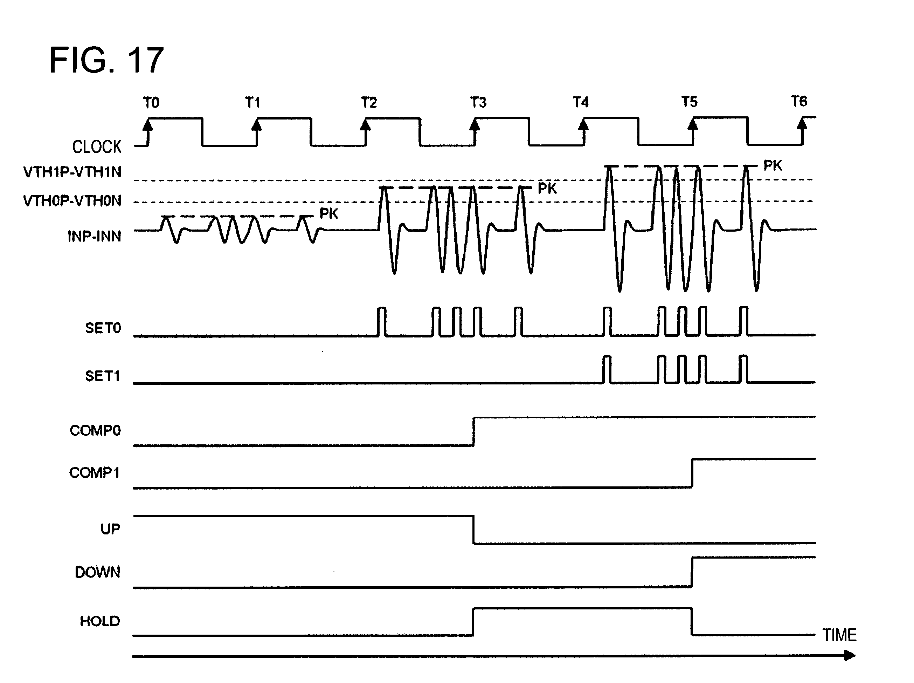

Further, for instance, the transmission line loss compensation circuit in a mode of the present invention controls so as to increase the compensation intensity when it detects that an absolute value of the peak voltage is smaller than either of absolute values of the first and the second reference voltages (VTH0, VTH1), and decrease the compensation intensity when it detects that the absolute value of the peak voltage is larger than either of the absolute values of the first and the second reference voltages (VTH0, VTH1) as shown FIG. 1. The peak voltage may be the maximum peak voltage as shown in FIG. 6, the minimum peak voltage as shown in FIG. 9, both the maximum and minimum peak voltages as shown in FIG. 12, or the differential peak voltage as shown in FIG. 17. In any case, the transmission line loss of high frequency components can be compensated by controlling so as to increase the compensation intensity when, with the center of the amplitude as a reference, it is detected that the absolute value of the peak voltage is smaller than either of the absolute values of the first and the second reference voltages (VTH0, VTH1), and decrease the compensation intensity when it is detected that the absolute value of the peak voltage is larger than either of the absolute values of the first and the second reference voltages (VTH0, VTH1).

Further, for instance, as shown in FIG. 1, in the transmission line loss compensation circuit in a mode of the present invention, the peak detector 14 operates in synchronization with a clock, and the level of the peak voltage is detected by comparing the peak voltage during one clock cycle to the first and the second reference voltages (VTH0, VTH1). As a result, as shown in FIGS. 6, 9, and 12, the peak voltage can be detected in synchronization with the clock. It is preferable that one cycle of the clock include one cycle or more of a signal Sac having high frequency components. However, it may be configured so that, in a case where a cycle of the signal having high frequency components does not complete in one clock cycle, the comparison period is extended to the next cycle.

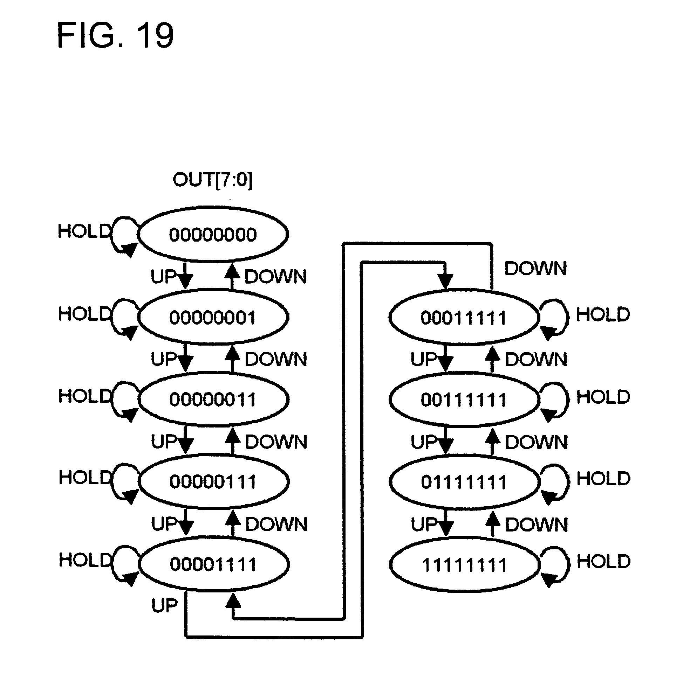

Further, for instance, as shown in FIGS. 1 and 19, in the transmission line loss compensation circuit in a mode of the present invention, the control circuit 15 controls the linear equalizer 11 using a thermometer code based on the detection results of the peak detector 14. Since the linear equalizer is controlled using a thermometer code, only 1 bit changes when the code changes, and no abnormal code will be outputted even if there is a skew between each bit constituting the code.

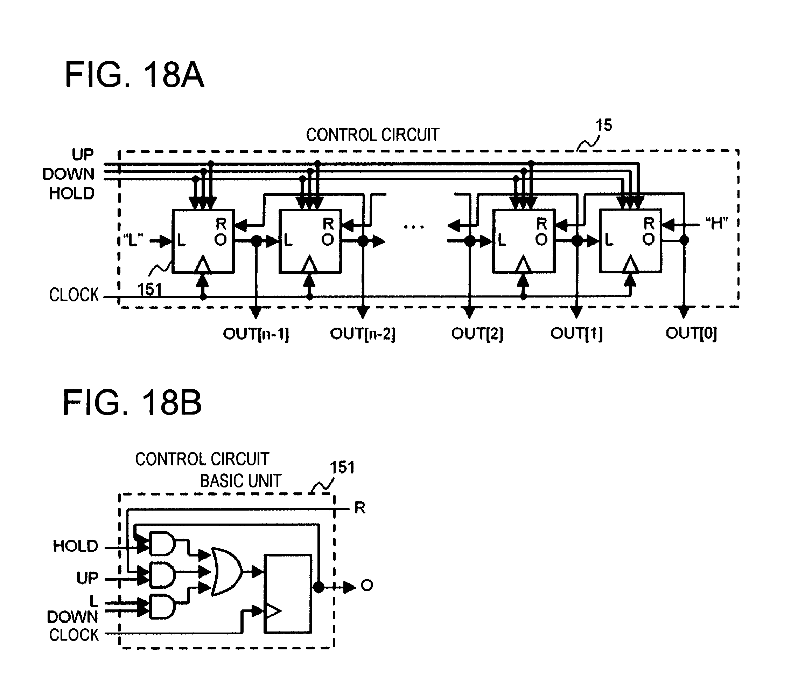

Further, for instance, as shown in FIGS. 1 and 18, in the transmission line loss compensation circuit in a mode of the present invention, the control circuit 15 is constituted by a shift register 151 that left-shifts, right-shifts, or holds according to the detection results of the peak detector 14, and the control circuit 15 controls the linear equalizer by changing the thermometer code by one bit by left-shifting or right-shifting.

Further, for instance, as shown in FIGS. 14 through 17, in the transmission line loss compensation circuit in a mode of the present invention, an input signal and output signal of a linear equalizer 11A are differential signals, and a peak detector 14A compares a peak voltage of the differential signals from a high-pass filter output Sac to a first reference voltage (VTH1P-VTH1N) and a second reference voltage (VTHOP-VTHON). As a result, the compensation intensity of the linear equalizer can be controlled by comparing the peak voltage of the differential signals (the peak potential difference) to the first reference voltage (the potential difference between VTH1P and VTH1N) and the second reference voltage (the potential difference between VTH0P and VTH0N).

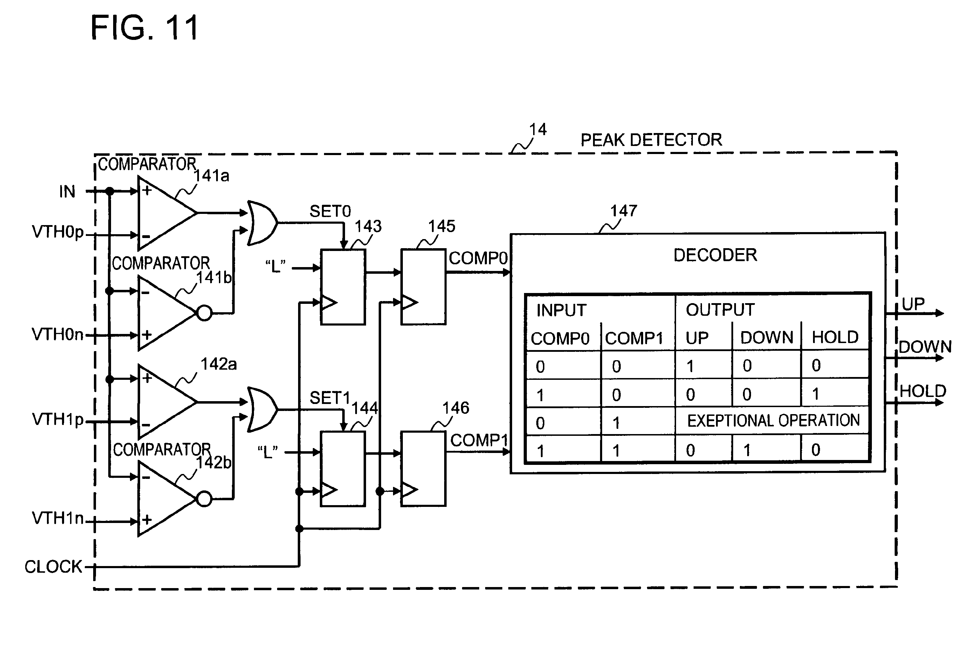

Further, for instance, as shown in FIGS. 1 and 11, in the transmission line loss compensation circuit in a mode of the present invention, the peak detector 14 comprises a first comparator 141a that compares a high-level peak voltage of the high-pass filter output to the first reference voltage VTH0p, a second comparator 142a that compares the high-level peak voltage to the second reference voltage VTH1p, a third comparator 141b that compares a low-level peak voltage of the high-pass filter to the third reference voltage VTH0n, and a fourth comparator 142b that compares the low-level peak voltage to the fourth reference voltage VTHIn, and the control circuit 15 controls the intensity of the linear equalizer based on the results of comparison by the first to the fourth comparators.

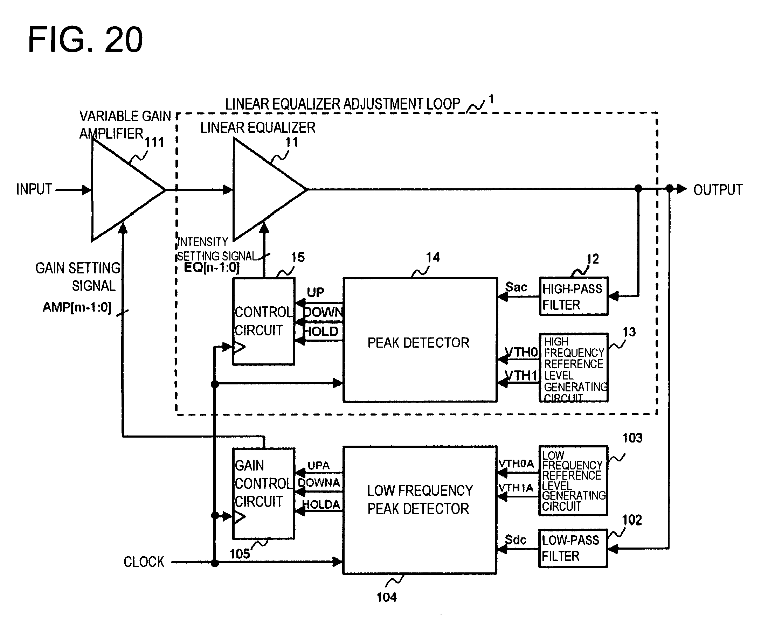

Further, for instance, as shown in FIG. 20, the transmission line loss compensation circuit in a mode of the present invention further comprises a variable gain amplifier 111 provided at a stage before or after the linear equalizer 11, a low-pass filter 102 that extracts low frequency components from an output signal that has passed through the variable gain amplifier 111 and the linear equalizer 11, a low frequency peak detector 104 that compares a peak voltage of a low-pass filter output Sdc to first and second low frequency reference voltages (VTH0A, VTH1A), and a gain control circuit 105 that controls the gain of the variable gain amplifier 111 so that the peak voltage of the low-pass filter output Sdc becomes an intermediate voltage between the first low frequency reference voltage VTH0A and the second low frequency reference voltage VTH1A based on the detection results of the low frequency peak detector 104, and the high-pass filter 12 extracts high frequency components Sac from an output signal that has passed through the variable gain amplifier 111 and the linear equalizer 11. Therefore, since the amplitude of low frequency components can be maintained within a predetermined range by the variable gain amplifier even in cases where the amplitude of the input signal fluctuates, the amplitudes of low frequency components and high frequency components can be maintained within a predetermined range by the linear equalizer and the variable gain amplifier. Further, the variable gain amplifier 111 is provided at a stage before the linear equalizer in FIG. 20, however, the variable gain amplifier may be provided at a stage after the linear equalizer if the output signal that has passed through the variable gain amplifier and the linear equalizer is fed to the high-pass filter and the low-pass filter.

Further, for instance, as shown in FIG. 20, the transmission line loss compensation circuit in a mode of the present invention further includes a low frequency reference level generating circuit 103 that generates the first and the second low frequency reference voltages (VTHOA, VTH1A). The low frequency reference level generating circuit 103 can determine a reference voltage level for the low frequency component amplitude of an output signal.

Further, for instance, as shown in FIG. 20, in the transmission line loss compensation circuit in a mode of the present invention, the gain control circuit 105 controls so as to increase the gain when it is detected that the absolute value of the peak voltage of the low-pass filter 102 is smaller than either of the absolute values of the first and the second low frequency reference voltages (VTHOA, VTH1A), and decrease the gain when it is detected that the absolute value of the peak voltage of the low-pass filter 102 is larger than either of the absolute values of the first and the second low frequency reference voltages (VTHOA, VTH1A). By controlling as described, the low frequency component amplitude level of an output signal can be stabilized within a predetermined range.

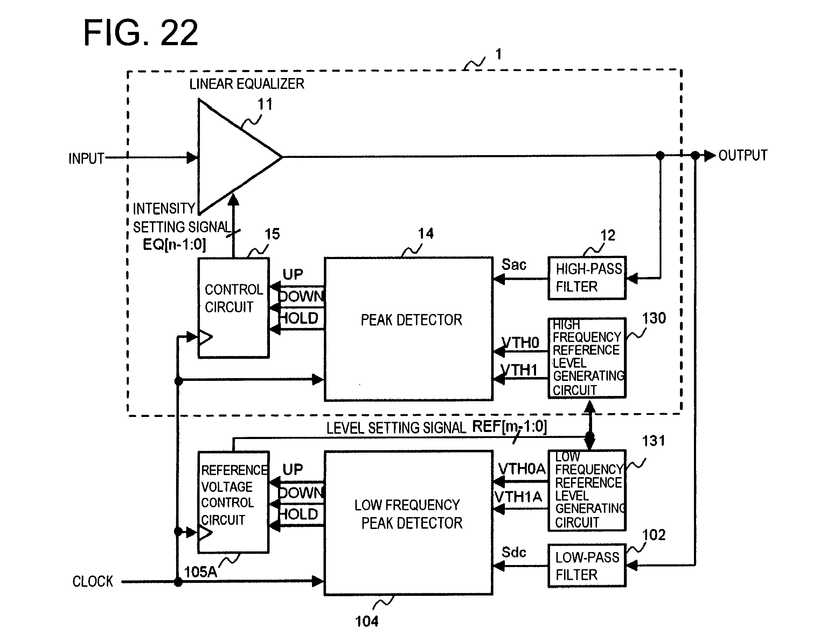

Further, for instance, as shown in FIG. 22, the transmission line loss compensation circuit in a mode of the present invention further includes the low-pass filter 102 that extracts low frequency components from an output of the linear equalizer 11, the low frequency peak detector 104 that compares the peak voltage of the low-pass filter output Sdc to the first and the second low frequency reference voltages (VTHOA, VTH1A), and a reference voltage control circuit that controls the amount of the absolute values of the first and the second low frequency reference voltages (VTH0A, VTH1A) so that the peak voltage of the low-pass filter output becomes an intermediate voltage between the first low frequency voltage and the second low frequency voltage based on the detection results of the low frequency peak detector 104, and that controls the amount of the absolute values of the first and the second reference voltages (VTH0, VTH1) according to the levels of the low frequency reference voltages (VTHOA, VTH1A). In other words, the transmission line loss of high frequency components can be stably compensated by controlling the first and the second low frequency reference voltages (VTHOA, VTH1A) according to the amplitude of low frequency components when the low frequency component amplitude of the input signal is not constant, and by controlling the reference voltage of high frequency components according to the low frequency reference voltages.

Further, for instance, as shown in FIG. 6, in a transmission line loss compensation method in a mode of the present invention, the transmission line loss of high frequency components is compensated using the linear equalizer 11; a peak voltage PK of high frequency components in the output signal of the linear equalizer 11 is detected and compared to the first reference voltage VTH0 and the second reference voltage VTH1; the compensation intensity of the linear equalizer is increased when the absolute value of the peak voltage PK is smaller than either of the absolute values of the first and the second reference voltages (VTH0, VTH1) (T0 to T1); the compensation intensity of the linear equalizer is decreased when the absolute value of the peak voltage is larger than either of the absolute values of the first and the second reference voltages (VTH0, VTH1) (T4 to T5); and the compensation intensity of the linear equalizer is maintained when the peak voltage PK is an intermediate voltage between the first and the second reference voltages (VTH0, VTH1) (T2 to T3). In other words, a stable state can maintained when there is no change in the transmission line since the compensation intensity of the linear equalizer is not changed thereby maintaining the previous state when the peak voltage PK is an intermediate voltage between the first and the second reference voltages (VTH0, VTH1).

Further, for instance, as shown in FIG. 6, in a transmission line loss compensation method in a mode of the present invention, the peak voltage of high frequency components is detected at every cycle (each cycle from T0 to T6) in synchronization with a clock, the peak voltage during one cycle is compared to the first and the second reference voltages, and the compensation intensity of the linear equalizer is controlled according to the results.

Further, for instance, as shown in FIG. 20, in a transmission line loss compensation method in a mode of the present invention, the peak voltage of low frequency components in the output signal of the linear equalizer 11 is detected and compared to the first low frequency reference voltage and the second low frequency reference voltage (VTHOA, VTH1A); the gain of the input signal or the output signal of the linear equalizer is increased when the absolute value of the peak voltage of low frequency components is smaller than either of the absolute values of the first and the second low frequency reference voltages (VTHOA, VTH1A); the gain of the input signal or the output signal is decreased when the absolute value of the peak voltage of low frequency components is larger than either of the absolute values of the first and the second low frequency reference voltages (VTHOA, VTH1A); and the gain of the input signal or the output signal is maintained when the peak voltage of low frequency components is an intermediate voltage between the first and the second low frequency reference voltages (VTH0A, VTH1A). Therefore, the amplitudes of high frequency components and low frequency components in the transmission line can be maintained within a predetermined range. Further, in FIG. 20, the variable gain amplifier 111 is provided at a stage before the linear equalizer 11, adjusting the peak voltage of the low frequency components in the input signal of the linear equalizer 11, however, the gain may be adjusted by providing the variable gain amplifier 111 at a stage behind the linear equalizer 11. The present invention will be described in detail using examples with reference to the drawings.

EXAMPLE 1

FIG. 1 is a block diagram of a transmission line loss compensation circuit of Example 1. In FIG. 1, the transmission line loss compensation circuit is constituted by the linear equalizer 11, the high-pass filter 12, the high frequency reference level generating circuit 13, the peak detector 14, and the control circuit 15, forming a linear equalizer adjustment loop 1.

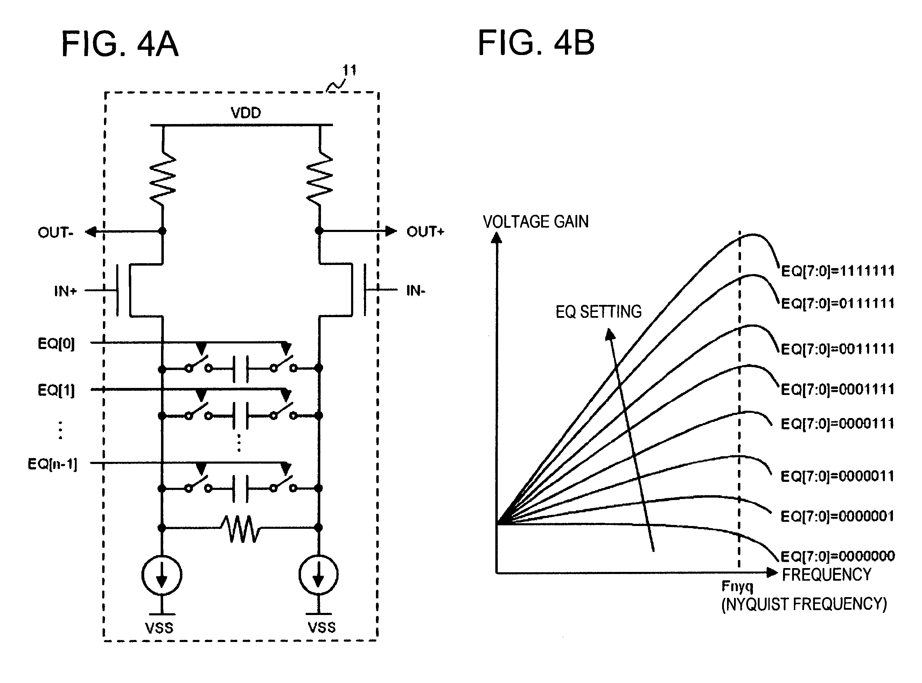

As in the conventional example shown in FIG. 2, the linear equalizer is an amplifier whose intensity is adjustable by a control signal. FIG. 4A is a circuit diagram of the linear equalizer 11, and FIG. 4B shows its frequency response. The linear equalizer has a constant low frequency gain, and performs stepwise adjustment of the gain difference (intensity) between the low frequency gain and the high frequency gain using an n-bit control signal.

In FIG. 4B, the frequency response is controlled by an 8-bit control signal. When the setting is changed, a skew between the control signals changed may momentarily cause an unwanted setting in cases where 2 bits or more of the signal are changed simultaneously. Therefore, an intensity setting signal is adjusted by the thermometer code so that only 1 bit of the control signal gets changed, and it is configured so that the intensity increases as the number of bits whose value is "1" increases.

When the compensation intensity of the linear equalizer 11 is insufficient, the high frequency component peak of the output signal becomes small, and conversely when the compensation is too much, the high frequency component peak gets larger. Therefore, only high frequency components are extracted from the output of the linear equalizer 11, and the intensity of the linear equalizer 11 is adjusted according to the amount of their peak level.

After the output signal of the linear equalizer passes through the high-pass filter 12, the high frequency components (Sac) of the output of the linear equalizer 11 is outputted from the high-pass filter 12. The peak detector 14 compares the relative relations between the peak level (PK) of the input signal (Sac) and the two reference voltages (VTH0, VTH1), and outputs UP, DOWN, and HOLD signals corresponding to the relative relations.

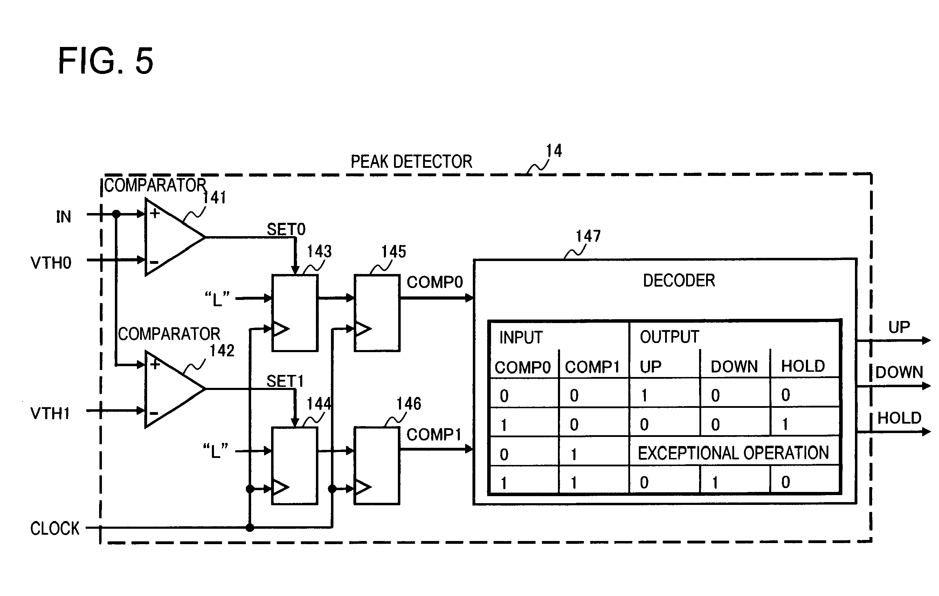

FIG. 5 is a block diagram showing a configuration example of the peak detector 14. The peak detector 14 is constituted by comparators 141 and 142, flip-flops 143, 144, 145, 146, and a decoder 147. In FIG. 5, the positive-side peak voltage of the input signal and the two reference voltages are compared. In FIG. 5, the logic of the output signal for the input signal of the decoder 147 is written inside the decoder 147.

FIG. 6 is a timing chart showing the operation of the peak detector 14 shown in FIG. 5. At clock timings T0 and T1, regarding the positive-side peak level (PK) of the input signal (IN), PK<VTH0<VTH1. Therefore set signals SET0 and SET1 outputted from the comparators 141 and 142 to the flip-flops 143 and 144 remain at a low level. Since the input signals of the flip-flops 145 and 146 are at a low level, COMPO and COMP1 signals are outputted at a low level at the clock timing T1. Therefore the decoder 147 outputs UP signal at a high level, DOWN signal at a low level, and HOLD signal at a low level.

At clock timings T2 and T3, regarding the peak level (PK) of the input signal (IN), VTH0<PL<VTH1. Therefore the set signal SET0 outputted from the comparator 141 to the flip-flop 143 becomes a pulse string, and the set signal SET1 outputted from the comparator 142 to the flip-flop 144 remains at the low level. The input signal of the flip-flop 145 is set to a high level, however, since the input signal of the flip-flop 146 stays at the low level, COMPO signal goes to a high level, COMP1 signal goes to the low level, and the decoder 147 outputs UP signal at a low level, DOWN signal at the low level, and HOLD signal at a high level at the clock timing T3.

At clock timings T4 and T5, regarding the peak level (PK) of the input signal (IN), VTH0<VTH1<PL. Therefore the set signals SET0 and SET1 outputted from the comparators 141 and 142 to the flip-flops 143 and 144 become pulse strings. Since the input signals of both the flip-flops 145 and 146 are set to the high level, both COMPO and COMP1 signals are outputted at the high level, and the decoder 147 outputs UP signal at the low level, the DOWN signal at a high level, and the HOLD signal at the low level at the clock timing T5.

FIG. 7 is a circuit diagram of the high frequency reference level generating circuit 13 that generates the two reference voltages (VTH0, VTH1) supplied to the peak detector 14. The high frequency reference level generating circuit 13 generates the two reference voltages VTH0 = VM+I$\times$R0 and VTH1 = VM+I$\times$(R0+R1) by applying a constant current to resistances R0 and R1. Here, VM denotes the center voltage level of the high frequency components (Sac) of the output of the linear equalizer 11. VTH0 and VTH1 are determined so that VTH0<PKtarget<VTH1 where a target level (PKtarget) is the positive-side peak level of Sac when the linear equalizer 11 is in an optimal setting.

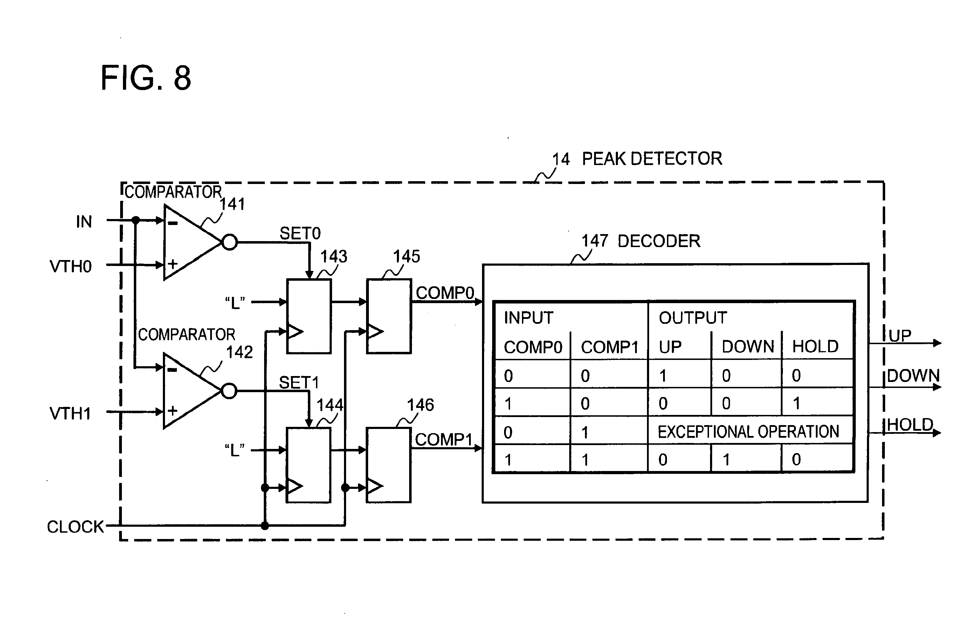

FIGS. 5 and 7 show the configuration of circuits that detect the positive-side peak level of an input signal, however, the peak detector may detect the negative-side peak as a circuit configuration shown in FIG. 8 does. FIG. 9 shows a timing chart in the peak detector 14 shown in FIG. 8. Comparing the timing chart in FIG. 9 to FIG. 6, the output results are the same as in the case where the positive-side peak level is detected. In this case, the high frequency reference level generating circuit needs to be configured so as to generate voltages lower than the center voltage (VM) of the input signal as shown in FIG. 10.

Further, the peak detector 14 may be configured so as to detect both the positive-side and the negative-side peaks as shown in FIG. 11. At this time, the high frequency reference level generating circuit needs to be configured so as to generate voltages both higher and lower than the center voltage (VM) as shown in FIG. 13. A timing chart in this case is shown in FIG. 12. Comparing the timing chart in FIG. 12 to FIG. 6, the same output results are obtained as in the case where the positive-side peak level is detected.

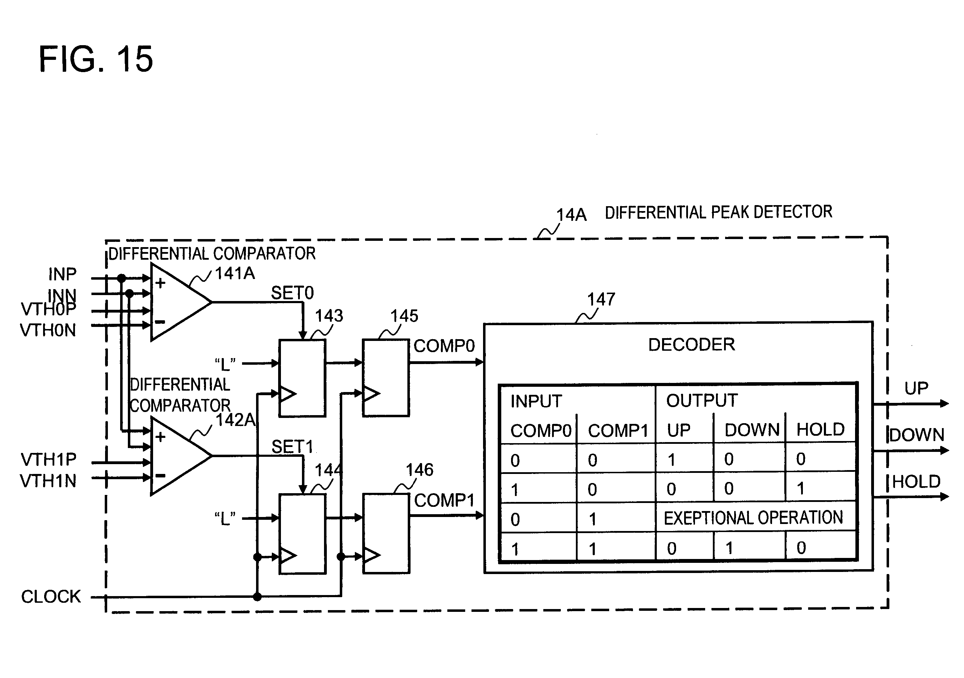

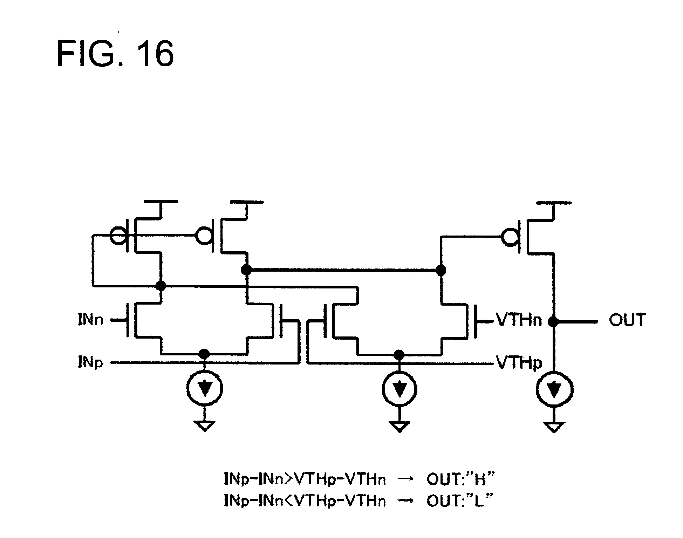

Further, as shown in FIG. 14, the linear equalizer 11 may be configured as to have differential outputs, instead of outputting a single-phase signal. FIG. 14 is a block diagram of the transmission loss compensation circuit having differential signals as the input/output signals. In this case, the peak detector 14A is configured as shown in FIG. 15. In FIG. 15, differential signals can be received by using differential comparators 141A and 142A. The configuration of a high frequency reference level generating circuit 13A is identical to that in FIG. 13. A configuration example of the differential comparators used in FIG. 15 is shown in FIG. 16. The differential comparators output high level signals when input differential signals INp-INn>VTHp-VTHn, and output low level signals when INp-INn<VTHp-VTHn. The timing chart of the peak detector 14A is shown in FIG. 17. Comparing the timing chart in FIG. 17 to FIG. 6, the same output results are obtained as in the case where the positive-side peak level of a single-phase input signal is detected.

The peak detector shown in FIG. 15 is configured so as to detect the positive-side peak of a differential input signal, however, if a comparator that detects the negative-side peak is provided, as in the case of single-phase signal, the negative-side peak, or both the positive-side and the negative-side peaks can be detected.

The control circuit 15 shown in FIG. 1 generates a code signal that controls the linear equalizer 11. Using the output signals (UP, DOWN, HOLD) of the peak detector 14, the compensation intensity for the high frequency components of the linear equalizer is increased, decreased or held. An example of the circuit configuration of the control circuit 15 is shown in FIG. 18A. When a setting code outputting signal of the control circuit 15 is n bit, the control circuit is constituted by connecting n number of control circuit basic units 151 shown in FIG. 18B. The control circuit 15 operates as a shift register capable of holding the output and of shifting to both directions, left and right, and the output signal is a thermometer code. The control circuit basic unit 151 shown in FIG. 18B operates as follows. When the control signals UP, DOWN, and HOLD are at the high level, the low level, and the low level respectively for the control circuit basic unit 151, an input signal R from a less significant bit side (the right side in FIG. 18A) is outputted at the clock timing. Similarly, when the control signals UP, DOWN, and HOLD are at the low level, the high level, and the low level respectively, an input signal L from a more significant bit side (the left side in FIG. 18A) is outputted at the clock timing. When the control signals UP, DOWN, and HOLD are at the low level, the low level, and the high level respectively, a state immediately before the clock timing is held. In other words, the state does not change at the clock timing.

FIG. 19 shows how the state of the control circ 15 changes when the setting code outputting signal is 8 bit. Using the three kinds of the state control signals (UP, DOWN, HOLD) supplied to the control circuit 15, the state is changed by incrementing (shifting to the more significant bit side), or decrementing (shifting to the less significant bit side) the thermometer code output or maintaining the current state.

Next, the operation of Example 1 will be described. For a signal with a clear eye opening, the degree of eye opening (the high frequency components of the signal) in a voltage direction is approximately the same amount as the peak amplitude (the low frequency components of the signal). When a transmission loss is high, the degree of eye opening in a voltage direction (the high frequency components of the signal) becomes small since the high frequency components greatly deteriorate due to the low-pass characteristics of a transmission line. By increasing the high frequency gain using the linear equalizer, the high frequency components of the signal can be matched to the low frequency components, and an output having a clear eye waveform can be obtained.

In the case of the configuration shown in FIG. 1, when the amplitude of the low frequency components (Sdc) of the input signal is Vin_dc, the amplitude of the high frequency components (Sac) is Vin_ac, the low frequency gain of the linear equalizer is Ae_dc, and the high frequency gain is Ae_ac, the low frequency components (Veq_dc) and the high frequency components (Veq_ac) of the linear equalizer output signal are expressed by the following expressions (1) and (2).

$$Veq\_dc = Vin\_dc \times Ae\_dc \qquad (1)$$

$$Veq\_ac = Vin\_ac \times Ae\_ac \qquad (2)$$

Now let us look at a case where the peak amplitude of the input signal, i.e., the low frequency component (Sdc) amplitude (Vin_dc), and the low frequency gain (Ae_dc) of the linear equalizer are known, fixed values. An example of the case where the low frequency component peak amplitude (Vin_dc) of the input signal is known is, for instance, a case where the output amplitude on the transmission side is determined by a transmission standard (hence it is known), and the low frequency component loss of a transmission line is small or predictable to a certain extent. In general, the low frequency component loss of a transmission line is small, and the amount of the low frequency component loss does not vary much among different kinds of transmission lines. If Ae_dc is known in the design stage, it means that the low frequency components (Veq_dc) of the linear equalizer output are known, fixed values.

On the other hand, since the amount of the high frequency component loss of a transmission line varies greatly depending on the kind of transmission line, the high frequency components (Vin_ac) of the input signal are unknown. In order to have a linear equalizer output having a clear eye opening, the following should be done. First, set an adjustment target level (PKtarget) for the high frequency components of the linear equalizer output signal based on the peak amplitude of the low frequency components (Veq_dc) of the linear equalizer output, a known, fixed level. Observe the peak amplitude level (PK) of the high frequency components (Veq_ac) of the linear equalizer output signal, and adjust the high frequency gain (Ae_ac) of the linear equalizer so that this peak amplitude level becomes close to the adjustment target (PKtarget).

The configuration shown in FIG. 1 realizes what is described above, and its concrete operation is as follows.

[The operation when the intensity of linear equalizer is insufficient]

The peak (PK) of the high frequency components (Sac) of the output signal of the linear equalizer 11 is smaller than the peak level (PKtarget) in the optimal setting. Therefore, the relative relations among the high frequency component peak level (PK) of the output of the linear equalizer 11 and the two reference voltages (VTH0 VTH1) are represented by PK<VTH0-VTH1. At this time, the peak detector 14 outputs UP signal at the high level, DOWN signal at the low level, and HOLD signal at the low level. The control circuit 15 behind the peak detector changes to a signal that increases the intensity setting of the linear equalizer 11 by one step because UP signal is at the high level. As the intensity of the linear equalizer 11 increases, so does the high frequency component peak level (PK) of the output of the linear equalizer 11.

This series of operations continues until PK ≈ PKtarget is achieved, and the relative relations among the three levels become VTHO<PK<VTH1. At this time, the peak detector 14 outputs UP signal at the low level, DOWN signal at the low level, and HOLD signal at the high level. The control circuit 15 behind the peak detector holds and maintains the intensity setting of the linear equalizer 11 because HOLD signal is at the high level. Once the circuit enters into a stable state, the intensity setting does not change unless the relative relations among the three levels, PK, VTH0, and VTH1, change. In other words, the setting code does not fluctuate.

[The operation when the intensity of the linear equalizer is too high]

The peak (PK) of the high frequency components (Sac) of the output signal of the linear equalizer 11 is higher than the peak level (PKtarget) in the optimal setting. Therefore, the relative relations among the high frequency component peak level (PK) of the output of the linear equalizer 11 and the two reference voltages (VTH0, VTH1) are represented by VTH0<VTH1<PK. At this time, the peak detector 14 outputs UP signal at the low level, DOWN signal at the high level, and HOLD signal at the low level. The control circuit 15 behind the peak detector changes to a signal that decreases the intensity setting of the linear equalizer 11 by one step because UP signal is at the low level. As the intensity of the linear equalizer 11 decreases, so does the high frequency component peak level (PK) of the output of the linear equalizer 11.

This series of operations continues until PK ≈ PKtarget is achieved, and the relative relations among the three levels become VTH0<PK<VTH1. At this time, the peak detector 14 outputs UP signal at the low level, DOWN signal at the low level, and HOLD signal at the high level. The control circuit behind the peak detector holds and maintains the intensity setting of the linear equalizer 11 because HOLD signal is at the high level. Once the circuit enters into a stable state, the intensity setting does not change (the setting code does not fluctuate) unless the relative relations among the three levels, PK, VTH0, and VTH1, change, such as when the transmission line changes, altering the amount of the high frequency component loss.

[The operation when the optimal setting of the linear equalizer changes due to an external factor]

For instance, if the transmission line is altered and the transmission loss changes, the linear equalizer optimal setting may change as well. In this case, the stable state (VTH0<PK<VTH1) changes to PK<VTH0<VTH1 or to VTH0<VTH1<PK. Therefore, even if the optimal setting changes, the circuit is automatically adjusted to a new optimal setting by one of the operations described above.

As described above, the intensity of the linear equalizer can be adjusted in the both cases where the intensity of the linear equalizer is insufficient or where it is too high. In a converged state, the setting code does not fluctuate and the stable state can be maintained as long as the relative relations of the three values remain within VTH0<PK<VTH1.

EXAMPLE 2

Example 1 is effective when the input amplitude is fixed and known in advance. However, there are cases where the input amplitude is not fixed or the value of the input amplitude is unknown. In these cases, a function (AGC: Auto Gain Control) that adjusts the output amplitude of the linear equalizer to a fixed level, regardless of the input amplitude, is added in Example 2.

FIG. 20 is a configuration example of a transmission line loss compensation circuit that adjusts the gain of the variable gain amplifier and the intensity of the linear equalizer. First, the configuration will be described. To the intensity adjustment loop 1 for the linear equalizer 11 in Example 1, the low-pass filter 102, the low frequency reference level generating circuit 103, the low frequency peak detector 104, the gain control circuit 105, and the variable gain amplifier 111 are added, newly forming a gain adjustment loop constituted by the variable gain amplifier 111, the linear equalizer 11, the low-pass filter 102, the low frequency peak detector 104, the gain control circuit 105, and the variable gain amplifier 111.

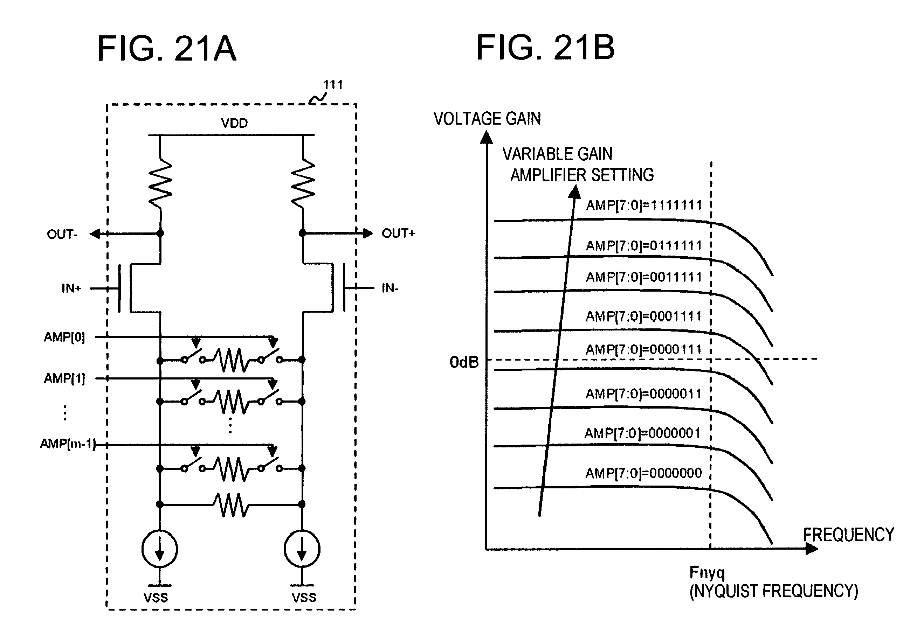

The variable gain amplifier 111 amplifies the entire frequency band equal to and below the Nyquist frequency by the same gain, and its gain is adjustable externally. An example of the circuit configuration of the variable gain amplifier 111 is shown in FIG. 21A, and its frequency response is shown in FIG. 21B. The variable gain amplifier 111 performs stepwise adjustment of the voltage gain using a thermometer code control signal, an m-bit control signal, as the linear equalizer 11.

FIG. 21B shows an example in which the control signal is 8 bit. As the linear equalizer 11 shown in FIG. 4B, the intensity setting signal is adjusted by the thermometer code so that only 1 bit of the control signal gets changed, and it is configured so that the gain increases as the number of bits whose value is "1" increases.

When the output signal of the linear equalizer 11 passes through the low-pass filter 102, the low-pass filter 102 outputs the low frequency components (Sdc) of the output of the linear equalizer 11.

The low frequency peak detector 104 is configured identically to the peak detector 14. The low frequency peak detector 104 compares the peak level (PK_dc) of the input signal (Sdc) to the two reference voltages (VTH0A, VTH1A) to obtain the relative relations among them, and outputs UP, DOWN, and HOLD signals corresponding to the relative relations. The two reference voltages (VTHOA, VTH1A) of the low frequency peak detector 104 are generated by the low frequency reference level generating circuit 103. VTH0A and VTH1A are determined so that VTH0A<PKtarget_dc<VTH1A where the positive-side peak level of the low frequency components (Sdc) of the output signal of the linear equalizer 11 is a target level (PKtarget_dc).

The control signal of the variable gain amplifier 111 is a thermometer code as that of the linear equalizer 11. Therefore, the gain control circuit 105 that generates the m-bit gain setting signal for the variable gain amplifier 111 can be configured identically to the control circuit 15 that generates the intensity setting signal for the linear equalizer 11. Since the control signal is m bit, m number of the control circuit basic constituting units 151 are needed.

Here, the positive-side peak of the equalizer output signal is detected, however, as in the basic configuration of Example 1 shown in FIG. 1, the detected peak may be the negative-side, or both the positive-side and the negative-side, or the positive-side, the negative-side, or both the positive-side and the negative-side of differential signals.

Next, the operation principle of Example 2 will be described. In FIG. 20, the gain adjustment loop formed by the variable gain amplifier 111, the linear equalizer 11, the low-pass filter 102, the low frequency peak detector 104, the gain control circuit 105, and the variable gain amplifier 11 operates as so to decrease the gain setting of the variable gain amplifier 111 when the output amplitude of the linear equalizer 11 is high and to increase the gain setting when it is low. As a result, the gain of the variable gain amplifier 111 is automatically adjusted so that the output amplitude of the linear equalizer 11 is always a predetermined level, regardless of changes in input amplitude.

In the case shown in FIG. 20, when the amplitude of the low frequency components (Sdc) of the input signal is Vin_dc, the amplitude of the high frequency components (Sac) is Vin_ac, the low frequency gain of the linear equalizer 11 is Ae_dc, the high frequency gain is Ae_ac, and the voltage gain of the variable gain amplifier 111 is Av, the low frequency components (Veq_dc) and the high frequency components (Veq_ac) of the output signal of the linear equalizer 11 are expressed by the following expressions (3) and (4).

$$Veq\_dc = Vin\_dc \times Av \times Ae\_dc \qquad (3)$$

$$Veq\_ac = Vin\_ac \times Av \times Ae\_ac \qquad (4)$$

According to the expressions (3) and (4) above, when Vin_dc is unknown and Ae_dc is a fixed value, one should change Av in order to adjust Veq_dc to the target level. A concrete operation for adjusting the peak amplitude, i.e., the low frequency components (Veq_dc), of the linear equalizer output to the target level is as follows. First, set the adjustment target level (PKtarget_dc) for the low frequency components (Sdc) of the linear equalizer output signal to any value. Observe the peak amplitude of the low frequency components (Veq_dc) of the linear equalizer output signal, and adjust the voltage gain (Av) of the variable gain amplifier so that this peak amplitude becomes close to the adjustment target level (PKtarget_dc).

Then, once the operation of adjusting the peak amplitude of the linear equalizer output has converged, the automatic adjustment of the linear equalizer intensity is possible as Example 1 shown in FIG. 1. More concretely, the following happens. If the operation of adjusting the peak amplitude of the linear equalizer output has converged, Veq_dc is approximately equal to PKtarget_dc. Further, the adjustment target level (PKtarget_ac) of the high frequency components of the linear equalizer output signal is determined to a single value by the adjustment target level (PKtarget_dc) of the low frequency components of the linear equalizer output signal. Therefore, by observing the peak amplitude of the high frequency components (Veq_ac) of the linear equalizer output signal, the high frequency gain (Ae_ac) of the linear equalizer is adjusted so that this peak amplitude gets closer to the adjustment target level (PKtarget_ac).

Further, cases are divided into a case where the input amplitude is small, a case where the input amplitude is large, and a case where the input amplitude has changed, and a concrete operation in each case will be described.

[The operation when the input amplitude is small]

When the input amplitude is small, the peak (PK_dc) of the low frequency components (Sdc) of the output signal of the linear equalizer 11 is smaller than the adjustment target level (PKtarget_dc). Therefore the relative relations among the peak level (PK_dc) of the low frequency components of the output of the linear equalizer 11 and the two low frequency reference voltages (VTH0A, VTH1A) are represented by PK_dc<VTH0A<VTH1A. At this time, the low frequency peak detector 104 outputs UP signal at the high level, DOWN signal at the low level, and HOLD signal at the low level. The gain control circuit 105 behind the peak detector changes to a signal that increases the gain setting of the variable gain amplifier 111 by one step because UP signal is at the high level.

When the gain of the variable gain amplifier 111 is increased, the peak level (PK_dc) of the low frequency components of the output of the linear equalizer 11 increases as well. This series of operations continues until PK_dc ≈ PKtarget_dc is achieved, and the relative relations among the three levels become VTH0A<PK_dc<VTH1A. At this time, the low frequency peak detector 104 outputs UP signal at the low level, DOWN signal at the low level, and HOLD signal at the high level. The gain control circuit 105 behind the peak detector holds and maintains the gain setting of the variable gain amplifier 111 because HOLD signal is at the high level. Once the circuit enters into a stable state, the intensity setting does not change (the setting code does not fluctuate) unless the relative relations among the three levels change. Then as soon as the operation of adjusting the peak amplitude of the linear equalizer output has converged, the intensity of the linear equalizer 11 is adjusted to the optimal setting by the automatic adjustment loop for the linear equalizer intensity described in Example 1.

[The operation when the input amplitude is large]

When the input amplitude is large, the peak (PK_dc) of the low frequency components (Sdc) of the output signal of the linear equalizer 11 is larger than the adjustment target level (PKtarget_dc). Therefore the relative relations among the peak level (PK_dc) of the low frequency components of the output of the linear equalizer 11 and the two low frequency reference voltages (VTHOA, VTH1A) are represented by VTH0A<VTH1A<PK_dc. At this time, the low frequency peak detector 104 outputs UP signal at the low level, DOWN signal at the high level, and HOLD signal at the low level. The gain control circuit 105 behind the peak detector changes to a signal that decreases the gain setting of the variable gain amplifier 111 by one step because DOWN signal is at the high level.

When the gain of the variable gain amplifier 111 is decreased, the peak level (PK_dc) of the low frequency components of the output of the linear equalizer 11 decreases as well. This series of operations continues until PK_dc ≈ PKtarget_dc is achieved, and the relative relations among the three levels become VTH0A<PK_dc<VTH1A. The operation thereafter is the same as the case where the input amplitude is small.

[The operation when the input amplitude has changed]

For instance, the linear equalizer output amplitude changes when the input amplitude changes due to an altered output amplitude setting on the transmitting end. In this case, the relative relations among the three levels change from the stable state (VTH0A<PK_dc<VTH1A) to PK_dc<VTH0A<VTH1A, or VTH0A<VTH1A<PK_dc. Therefore, even if the output amplitude of the linear equalizer changes, the output amplitude of the linear equalizer will be automatically adjusted to the target level by one of the operations described above.

As described, Example 1 is effective when the input amplitude is constant and the amount of the amplitude is known in advance, however, in Example 2, the intensity of the linear equalizer can be adjusted even in the cases where the input amplitude fluctuates.

EXAMPLE 3

In Example 2, the function (AGC function: Auto Gain Control) that adjusts the output amplitude of the linear equalizer to a fixed level regardless of the input amplitude is added so that the intensity of the linear equalizer can be adjusted when the input amplitude fluctuates. In addition, the automatic adjustment of the linear equalizer intensity can be achieved by changing the two reference voltages (VTH0, VTH1), i.e., the adjustment target level, in connection with the output amplitude level of the linear equalizer, as described below as Example 3.

FIG. 22 is a block diagram of a transmission line loss compensation circuit of Example 3 that adjusts the reference voltages in connection with the output amplitude of the linear equalizer. To the linear equalizer adjustment loop 1 described in Example 1, the low-pass filter 102, a low frequency reference level generating circuit 131, the low frequency peak detector 104, and a reference voltage control circuit 105A are added, newly forming a low frequency reference voltage adjustment loop constituted by the low frequency reference level generating circuit 131, the low frequency peak detector 104, the reference voltage control circuit 105A, and the low frequency reference level generating circuit 131.

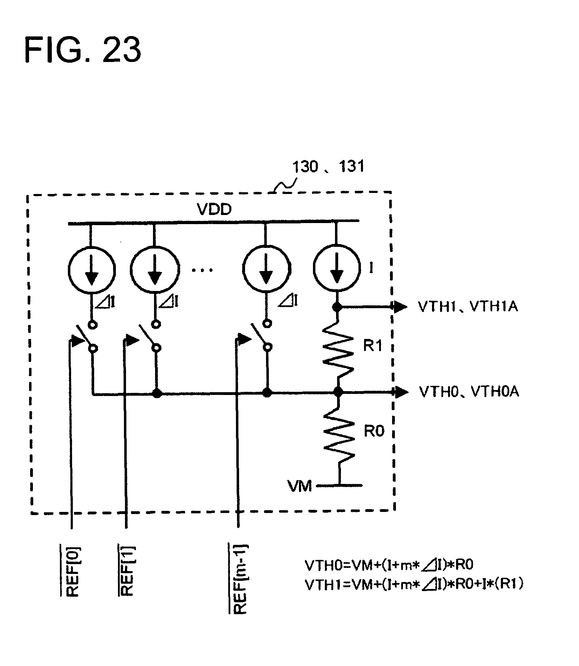

The low frequency peak detector 104 is configured identically to the peak detector 14 shown in FIG. 5. The levels of the high frequency reference level generating circuit 130 and the low frequency reference level generating circuit 131 are adjusted by the thermometer code. FIG. 23 shows a circuit diagram of the high frequency reference level generating circuit 130 and the low frequency reference level generating circuit 131. The high frequency reference level generating circuit 130 and the low frequency reference level generating circuit 131 generate the two low frequency reference voltages VTH0A = VM+(I+m $\times \Delta$ I) $\times$ R0 and VTH1A = VM+(I+m$\times\Delta$I)$\times$R0+I$\pi$R1 by applying a current to the resistances R0 and R1. The reference voltages are switched in a stepwise manner by the thermometer code supplied by the reference voltage control circuit 105A with a resolution of $\Delta$I$\times$R0. The thermometer code is used as the control signal so that an abnormal code does not get outputted due to a skew between bits when the code changes, the same reason why the thermometer code is used for controlling the linear equalizer. In FIG. 23, it is configured so that VTH0 and VTH1 decrease as the number of bits whose value is "1" increases. Further, the circuit configuration shown in FIG. 18 can be used to configure the reference voltage control circuit 105A as it is since the control circuit 15 has the same function of outputting the thermometer code based on UP, DOWN, and HOLD signals.

Further, the positive-side peak of the equalizer output signal is detected by the low frequency peak detector 104, however, as in the concrete configuration examples of the peak detector 14 shown in FIGS. 5, 8, 11, and 15, the detected peak may be the negative-side, or both the positive-side and the negative-side, or the positive-side, the negative-side, or both the positive-side and the negative-side of differential signals.

Next, cases are divided into a case where the input amplitude is small, a case where the input amplitude is large, and a case where the input amplitude has changed, and a concrete operation of Example 3 in each case will be described.

[The operation when the input amplitude is small]

When the input amplitude is small, the relative relations among the peak level (PK_dc) of the low frequency components of the output of the linear equalizer 11 and the two low frequency reference voltages (VTHOA, VTH1A) are represented by PK_dc<VTH0A<VTH1A. At this time, the low frequency peak detector 104 outputs UP signal at the high level, DOWN signal at the low level, and HOLD signal at the low level. The reference voltage control circuit 105A behind the peak detector increases the number of the bits of the setting code, for the high frequency reference level generating circuit 130 and the low frequency reference level generating circuit 131, that go to the high level by one bit because UP signal is at the high level. As a result, both reference voltages of the high frequency reference level generating circuit 130 and the low frequency reference level generating circuit 131 decrease. This series of operations continues until the relative relations among the three levels become VTH0A<PK_dc<VTH1A. At this time, the low frequency peak detector 104 outputs UP signal at the low level, DOWN signal at the low level, and HOLD signal at the high level. The reference voltage control circuit 105A behind the peak detector holds the control signal for the high frequency reference level generating circuit 130 and the low frequency reference level generating circuit 131 because HOLD signal is at the high level.

Once the circuit enters into a stable state, the control signal does not change (the setting code does not fluctuate) unless the relative relations among the three levels change. Then, when the operation of adjusting the low frequency reference voltages VTH0A and VTH1A has converged, the intensity of the linear equalizer 11 is adjusted to the optimal setting by the automatic adjustment loop for the linear equalizer intensity described in Example 1 since VTH0 and VTH1 have decreased following the amplitude.

[The operation when the input amplitude is large]

When the input amplitude is large, the relative relations among the peak level (PK_dc) of the low frequency components of the output of the linear equalizer 11 and the two low frequency reference voltages (VTH0A, VTH1A) are represented by VTH0A<VTH1A<PK_dc. At this time, the low frequency peak detector 104 outputs UP signal at the low level, DOWN signal at the high level, and HOLD signal at the low level. The reference voltage control circuit 105A behind the peak detector decreases the number of the bits of the setting code, for the high frequency reference level generating circuit 130 and the low frequency reference level generating circuit 131, that go to the high level by one bit because DOWN signal is at the high level. As a result, the reference voltage outputted by the high frequency reference level generating circuit 130 and the low frequency reference voltage outputted by the low frequency reference level generating circuit 131 both increase. This series of operations continues until the relative relations among the three levels become VTH0A<PK_dc<VTH1A. The operation after VTH0A<PK_dc<VTH1A has been achieved is the same as the case where the input amplitude is small.

[The operation when the input amplitude has changed]

For instance, the linear equalizer output amplitude changes when the input amplitude changes due to an altered output amplitude setting on the transmitting end. In this case, the relative relations among the three levels change from the stable state (VTH0A<PK_dc<VTH1A) to PK_dc<VTH0A<VTH1A, or VTH0A<VTH1A<PK_dc. Therefore, even if the output amplitude of the linear equalizer changes, the output amplitude of the linear equalizer will be automatically adjusted to the target level by one of the operations described above.

As described, according to each example of the present invention, the intensity of the linear equalizer can be automatically adjusted regardless of the amount of transmission loss. Further, the intensity setting signal does not fluctuate in a converged state. Further, even if an optimal setting of the linear equalizer moves out of a stable state due to a change in transmission loss, the circuit can be automatically adjusted back to a new optimal setting. Moreover, an effect that the circuit can cope with any input amplitude level, in addition to changes in transmission loss, can be obtained in the configurations of Examples 2 and 3.

Further, the variable gain amplifier 111 is provided at a stage before the linear equalizer 11 in FIG. 20 of Example 2, however, the variable gain amplifier 111 may be provided at a stage after the linear equalizer as long as the signal fed to the high-pass filter 12 has passed through the variable gain amplifier and the linear equalizer. It is preferable that the variable gain amplifier be provided before the linear equalizer because the level of the signal fed to the linear equalizer can be optimized.

It should be noted that other objects, features and aspects of the present invention will become apparent in the entire disclosure and that modifications may be done without departing the gist and scope of the present invention as disclosed herein and claimed as appended herewith.

Also it should be noted that any combination of the disclosed and/or claimed elements, matters and/or items may fall under the modifications aforementioned.

**Claims**

1. A transmission line loss compensation circuit comprising:

    a linear equalizer that compensates for a transmission line loss of high frequency components;
    a high-pass filter that extracts high frequency components from an output of said linear equalizer;
    a peak detector that compares a peak voltage of an output of said high-pass filter to first and second reference voltages; and
    a control circuit that controls compensation intensity of said linear equalizer based on detection results of said peak detector so that said peak voltage becomes an intermediate voltage between said first reference voltage and said second reference voltage.

2. The transmission line loss compensation circuit as defined in claim 1 further comprising a high frequency reference level generating circuit that generates said first and second reference voltages.

3. The transmission line loss compensation circuit as defined in claim 1 or 2 controlling so as to increase said compensation intensity when it is detected that an absolute value of said peak voltage is smaller than either of absolute values of said first and second reference voltages, and controlling so as to decrease said compensation intensity when it is detected that an absolute value of said peak voltage is larger than either of absolute values of said first and second reference voltages.

4. The transmission line loss compensation circuit as defined in any one of claims 1 to 3 wherein said peak detector operates in synchronization with a clock, compares a peak voltage during one cycle of said clock to said first and second reference voltages, and detects the level of the peak voltage.

5. The transmission line loss compensation circuit as defined in any one of claims 1 to 4 wherein said control circuit controls said linear equalizer based on detection results of a peak detector using a thermometer code.

6. The transmission line loss compensation circuit as defined in claim 5 wherein said control circuit is constituted by a shift register that performs a left-shift, right-shift, or hold operation according to detection results of said peak detector, and said control circuit controls said linear equalizer by changing said thermometer code by one bit by said left-shift or right-shift operation.

7. The transmission line loss compensation circuit as defined in any one of claims 1 to 6 wherein input and output signals of said linear equalizer are differential signals, and said peak detector compares a peak voltage of differential signals outputted by said high-pass filter to said first and second reference voltages.

8. The transmission line loss compensation circuit as defined in any one of claims 1 to 6 wherein said peak detector comprises:

a first comparator that compares a high level peak voltage of the output of said high-pass filter to said first reference voltage;
a second comparator that compares said high level peak voltage to said second reference voltage;
a third comparator that compares a low level peak voltage of said high-pass filter to a third reference voltage; and
a fourth comparator that compares said low level peak voltage to a fourth reference voltage; and
said control circuit controls the intensity of said linear equalizer based on comparison results of said first to fourth comparators.

9. The transmission line loss compensation circuit as defined in any one of claims 1 to 8 further comprising:

a variable gain amplifier provided at a stage before or behind said linear equalizer;
a low-pass filter that extracts low frequency components from an output signal that has passed through said variable gain amplifier and said linear equalizer;
a low frequency peak detector that compares a peak voltage of an output of said low-pass filter to first and second low frequency reference voltages; and
a gain control circuit that controls a gain of said variable gain amplifier based on detection results of said low frequency peak detector so that the peak voltage of the output of said low-pass filter becomes an intermediate voltage between said first low frequency reference voltage and said second low frequency reference voltage; wherein
said high-pass filter extracts high frequency components from an output signal that has passed through said variable gain amplifier and said linear equalizer.

10. The transmission line loss compensation circuit as defined in claim 9 further including a low frequency reference level generating circuit that generates said first and second low frequency reference voltages.

11. The transmission line loss compensation circuit as defined in claim 9 or 10 wherein said gain control circuit controls so as to increase said gain when it is detected that an absolute value of the peak voltage of said low-pass filter is smaller than either of absolute values of said first and second low frequency reference voltages, and said gain control circuit controls so as to decrease said gain when it is detected that an absolute value of the peak voltage of said low-pass filter is larger than either of absolute values of said first and second reference voltages.

12. The transmission line loss compensation circuit as defined in any one of claims 1 to 8 further including:

a low-pass filter that extracts low frequency components from the output of said linear equalizer;
a low frequency peak detector that compares a peak voltage of an output of said low-pass filter to first and second low frequency reference voltages; and
a reference voltage control circuit that controls amounts of absolute values of said first and second low frequency reference voltages based on detection results of said low frequency peak detector so that the peak voltage of the output of said low-pass filter becomes an intermediate voltage between said first low frequency reference voltage and said second low frequency reference voltage, and controls to match the amounts of absolute values of said first and second reference voltages to the level of said low frequency reference voltages.

13. A transmission line loss compensation method for compensating for a transmission line loss of high frequency components using a linear equalizer, the method comprising:

detecting a peak voltage of high frequency components in an output signal of said linear equalizer and comparing said peak voltage with a first reference voltage and a second reference voltage;
increasing compensation intensity of said linear equalizer when an absolute value of said peak voltage is smaller than either of absolute values of said first and second reference voltages;
decreasing the compensation intensity of said linear equalizer when an absolute value of said peak voltage is larger than either of absolute values of said first and second reference voltages; and
maintaining the compensation intensity of said linear equalizer when said peak voltage is an intermediate voltage between said first and second reference voltages.

14. The transmission line loss compensation method as defined in claim 13, wherein detecting the peak voltage of said high frequency components is performed at every one cycle in synchronization with a clock, the peak voltage during said one cycle is compared to said first and second reference voltages, and the compensation intensity of said linear equalizer is controlled according to the results.

**15.** The transmission line loss compensation method as defined in claim 13 or 14, wherein

a peak voltage of low frequency components in the output signal of said linear equalizer is detected and compared to a first low frequency reference voltage and a second low frequency reference voltage;

a gain of an input signal or output signal of said linear equalizer is increased when an absolute value of the peak voltage of said low frequency components is smaller than either of absolute values of said first and second low frequency reference voltages;

the gain of said input signal or output signal is decreased when an absolute value of the peak voltage of said low frequency components is larger than either of absolute values of said first and second low frequency reference voltages; and

the gain of said input signal or output signal is maintained when the peak voltage of said low frequency components is an intermediate voltage between said first and second low frequency reference voltages.

# FIG. 1

LINEAR EQUALIZER ADJUSTMENT LOOP ~ 1

LINEAR EQUALIZER

INPUT → [LINEAR EQUALIZER 11] → OUTPUT

INTENSITY SETTING SIGNAL EQ[n-1:0]

CONTROL CIRCUIT 15
UP
DOWN
HOLD

PEAK DETECTOR 14

Sac

HIGH-PASS FILTER 12

VTH0
VTH1

HIGH FREQUENCY REFERENCE LEVEL GENERATING CIRCUIT 13

CLOCK

EP 2 197 122 A1

# FIG. 2    PRIOR ART

EP 2 197 122 A1

# FIG. 3A

BUFFER OUTPUT WHEN EQ IS OPTIMALLY SET

Vpp(high)

Vpp(low)

Vcom

1  1  1  0  1  0  1  0  1  0  0  0

THE POLARITY
OF THE CODE
DOES NOT CHANGE

THE POLARITY OF THE CODE CHANGES

THE POLARITY
OF THE CODE
DOES NOT CHANGE

# FIG. 3B

RECTIFIER CIRCUIT OUTPUT

Vave(low)

Vave(high)
=Vave(low)*2/ π

Vcom

THE POLARITY
OF THE CODE
DOES NOT CHANGE

THE POLARITY OF THE CODE CHANGES

THE POLARITY
OF THE CODE
DOES NOT CHANGE

# FIG. 4A

# FIG. 4B

EP 2 197 122 A1

FIG. 5

# FIG. 6

EP 2 197 122 A1

# FIG. 7

VTH0=VM+I*R0

VTH1=VM+I*(R0+R1)

# FIG. 8

EP 2 197 122 A1

14  PEAK DETECTOR

COMPARATOR 141

IN

VTH0

SET0

143    145

"L"    COMP0

COMPARATOR 142

SET1

144    146

VTH1

"L"    COMP1

CLOCK

147  DECODER

| INPUT | | OUTPUT | | |
|---|---|---|---|---|
| COMP0 | COMP1 | UP | DOWN | HOLD |
| 0 | 0 | 1 | 0 | 0 |
| 1 | 0 | 0 | 0 | 1 |
| 0 | 1 | EXCEPTIONAL OPERATION | | |
| 1 | 1 | 0 | 1 | 0 |

UP

DOWN

HOLD

FIG. 9

EP 2 197 122 A1

# FIG. 10

13

VM

R0

VTH0

R1

VTH1

I

VSS

VTH0=VM-I*R0
VTH1=VM-I*(R0+R1)

# FIG. 11

PEAK DETECTOR 14

COMPARATOR 141a

IN

VTH0p

COMPARATOR 141b

VTH0n

142a

VTH1p

COMPARATOR 142b

VTH1n

CLOCK

SET0 143 145 COMP0

"L" →

SET1 144 146 COMP1

"L" →

DECODER 147

| INPUT | | OUTPUT | | |
|---|---|---|---|---|
| COMP0 | COMP1 | UP | DOWN | HOLD |
| 0 | 0 | 1 | 0 | 0 |
| 1 | 0 | 0 | 0 | 1 |
| 0 | 1 | EXEPTIONAL OPERATION | | |
| 1 | 1 | 0 | 1 | 0 |

UP

DOWN

HOLD

EP 2 197 122 A1

# FIG. 12

EP 2 197 122 A1

# FIG. 13

VTH0p−VTH0n=I∗R0
VTH1p−VTH1n=I∗(R0+R1)

# FIG. 14

LINEAR EQUALIZER ADJUSTMENT LOOP

1

LINEAR EQUALIZER

11A

INPUT

OUTPUT

INTENSITY SETTING SIGNAL
EQ[n-1:0]

15A

CONTROL CIRCUIT

UP

DOWN

HOLD

14A

PEAK DETECTOR

Sac

12A

HIGH-PASS FILTER

VTH0p, VTH0n

13A

HIGH FREQUENCY REFERENC LEVEL GENERATI CIRCUIT

VTH1p, VTH1n

CLOCK

EP 2 197 122 A1

# FIG. 15

14A DIFFERENTIAL PEAK DETECTOR

DIFFERENTIAL COMPARATOR 141A

INP, INN, VTH0P, VTH0N → 141A → SET0 → 143 → 145 → COMP0

DIFFERENTIAL COMPARATOR 142A

"L" → 143

VTH1P, VTH1N → 142A → SET1 → 144 → 146 → COMP1

"L" → 144

CLOCK

147 DECODER

| INPUT | | OUTPUT | | |
|-------|-------|-----|------|------|
| COMP0 | COMP1 | UP | DOWN | HOLD |
| 0 | 0 | 1 | 0 | 0 |
| 1 | 0 | 0 | 0 | 1 |
| 0 | 1 | EXEPTIONAL OPERATION | | |
| 1 | 1 | 0 | 1 | 0 |

UP

DOWN

HOLD

EP 2 197 122 A1

# FIG. 16

INn
INp
VTHn
VTHp
OUT

INp-INn>VTHp-VTHn → OUT:"H"
INp-INn<VTHp-VTHn → OUT:"L"

# FIG. 17

EP 2 197 122 A1

# FIG. 18A

CONTROL CIRCUIT 15

UP
DOWN
HOLD

"L" → 

151

CLOCK

OUT[n-1]  OUT[n-2]  OUT[2]  OUT[1]  OUT[0]

"H"

# FIG. 18B

CONTROL CIRCUIT
BASIC UNIT 151

R

HOLD

UP

L
DOWN
CLOCK

O

EP 2 197 122 A1

# FIG. 19

# FIG. 20

EP 2 197 122 A1

FIG. 21A

FIG. 21B

# FIG. 22

LINEAR EQUALIZER
11

INPUT

INTENSITY
SETTING SIGNAL
EQ[n-1:0]

1

15

CONTROL
CIRCUIT

UP
DOWN
HOLD

14

PEAK DETECTOR

Sac

VTH0

VTH1

12

HIGH-PASS
FILTER

130

HIGH
FREQUENCY
REFERENCE
LEVEL
GENERATING
CIRCUIT

OUTPUT

LEVEL SETTING SIGNAL REF[m-1:0]

REFERENCE
VOLTAGE
CONTROL
CIRCUIT

UP
DOWN
HOLD

LOW FREQUENCY
PEAK DETECTOR

VTH0A

VTH1A

131

LOW
FREQUENCY
REFERENCE
LEVEL
GENERATING
CIRCUIT

102

Sdc

LOW-PASS
FILTER

CLOCK

105A

104

# FIG. 23

130、131

VDD

⎓I

VTH1、VTH1A

R1

VTH0、VTH0A

R0

VM

$\overline{REF[0]}$  $\overline{REF[1]}$  $\overline{REF[m-1]}$

$VTH0 = VM + (I + m * \triangle I) * R0$

$VTH1 = VM + (I + m * \triangle I) * R0 + I * (R1)$

Europäisches
Patentamt

European
Patent Office

Office européen
des brevets

**EUROPEAN SEARCH REPORT**

Application Number

EP 09 01 5264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 392 001 A1 (UNIV BRUXELLES [BE]) 25 February 2004 (2004-02-25) * paragraph [0022] - paragraph [0027] * ----- | 1-3,7-15 | INV. H04B3/14 H04L25/03 |
| A | US 6 975 678 B1 (LE VUONG KIM [US] ET AL) 13 December 2005 (2005-12-13) * column 5, line 43 - column 7, line 21 * ----- | 1-15 | |
| | | | **TECHNICAL FIELDS SEARCHED (IPC)** H04B H04L |

The present search report has been drawn up for all claims

| Place of search | Date of completion of the search | Examiner |
|---|---|---|
| The Hague | 7 May 2010 | De Iulis, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 01 5264

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2010

| Patent document cited in search report | | Publication date | Patent family member(s) | | Publication date |
|---|---|---|---|---|---|
| EP 1392001 | A1 | 25-02-2004 | AU<br>WO<br>US | 2003258393 A1<br>2004019512 A1<br>2006098727 A1 | 11-03-2004<br>04-03-2004<br>11-05-2006 |
| US 6975678 | B1 | 13-12-2005 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• JP 2008314893 A

### Non-patent literature cited in the description

• **Uchiki, H. et al.** A 6Gb/s RX Equalizer Adapted Using Direct Measurement of the Equalizer Output Amplitude. *ISSCC 2008/SESSION 5/HIGH-SPEED TRANSCERIVERS/5.,* 04 February 2008